# FASCICULE DE BREVET EUROPEEN

(11) **EP 3 014 678 B1**
(45) Date de publication et mention de la délivrance du brevet: **29.08.2018**
(21) Numéro de dépôt: 14738570.2
(22) Date de dépôt: 23.06.2014
(51) Int. Cl.: H01M 4/04, H01M 4/13, H01M 4/139, H01M 4/62, H01M 10/0525

(54) **PROCEDE D'IMPRESSION OU DE DEPOT PAR ATOMISATION POUR LA PREPARATION D'UNE ELECTRODE FLEXIBLE SUPPORTEE ET LA FABRICATION D'UNE BATTERIE LITHIUM-ION**
SPRÜHDRUCK- ODER SPRÜHABLAGERUNGSVERFAHREN ZUR HERSTELLUNG EINER GETRÄGERTEN FLEXIBLEN ELEKTRODE UND HERSTELLUNG EINER LITHIUM-IONEN-BATTERIE
SPRAY PRINTING OR SPRAY DEPOSITION METHOD FOR THE PRODUCTION OF A SUPPORTED FLEXIBLE ELECTRODE, AND MANUFACTURE OF A LITHIUM-ION BATTERY

(30) Priorité: 24.06.2013 FR 1356009
(43) Date de publication de la demande: 04.05.2016
(73) Titulaire: Institut Polytechnique de Grenoble, 38031 Grenoble Cedex (FR); Centre National de la Recherche Scientifique (C.N.R.S.), 75016 Paris (FR)
(72) Inventeur: BENEVENTI, Davide, F-38400 Saint Martin d'Heres (FR); CHAUSSY, Didier, F-38320 Brie Et Angonnes (FR); EL BARADAI, Oussama, F-38000 Grenoble (FR); JABBOUR, Lara, F-38000 Grenoble (FR); BONGIOVANNI, Roberta, I-10129 Turin (IT)
(74) Mandataire: Goulard, Sophie
(86) Numéro de dépôt international: PCT/FR2014/051556
(87) Numéro de publication internationale: WO 2014/207358

(56) Documents cités:
- EP-A2- 0 028 879
- WO-A2-03/069700
- FR-A1- 2 965 107

## Description

La présente invention se rapporte au domaine des batteries Lithium-ions (Li-ion) rechargeables flexibles. En particulier, la présente invention concerne un procédé d'impression ou de dépôt par atomisation (spray) pour la préparation d'une électrode flexible supportée ne nécessitant ni l'emploi d'un liant polymère synthétique, ni celui de solvants organiques, ni celui de plastifiants et un procédé de fabrication d'une batterie lithium-ion comprenant au moins une telle électrode flexible supportée, facile à assembler et présentant de bonnes performances électrochimiques.

Les batteries Li-ion flexibles peuvent être utilisées, tout comme les batteries Li-ion classiques, dans de nombreux dispositifs qui comprennent des appareils portables, tels que notamment les téléphones mobiles, les ordinateurs et l'outillage léger, ou des appareils plus lourds tels que des moyens de transports à deux roues (bicyclettes, cyclomoteurs) ou à quatre roues (véhicules automobiles électriques ou hybrides). De manière générale, les batteries flexibles peuvent être utilisées dans toutes les applications où il est souhaitable que la batterie puisse se déformer ou se plier afin par exemple de remplir des espaces vides dans des voitures hybrides ou électriques ou d'alimenter des dispositifs électroniques pliables autres que dans toutes les applications classiques des batteries Li-ion rigides.

Une batterie lithium-ion (Li-ion) classique comprend au moins une électrode négative (anode) et au moins une électrode positive (cathode) entre lesquelles est placé un électrolyte solide ou un séparateur imprégné par un électrolyte liquide. L'électrolyte liquide est par exemple constitué d'un sel de lithium en solution dans un solvant choisi pour optimiser le transport et la dissociation des ions. En particulier, dans une batterie lithium-ion, chacune des électrodes comprend généralement un collecteur de courant (substrat en métal) sur lequel est déposé un matériau composite qui comprend une matière active vis-à-vis du lithium, un polymère qui joue le rôle de liant (par exemple un copolymère du fluorure de vinylidène (PVdF)), un agent conférant une conductivité électronique (tel que par exemple du noir de carbone) et un solvant.

Au cours du fonctionnement de la batterie, des ions lithium passent de l'une des électrodes à l'autre à travers l'électrolyte. Lors de la décharge de la batterie, une quantité de lithium réagit avec la matière active d'électrode positive à partir de l'électrolyte, et une quantité équivalente est introduite dans l'électrolyte à partir de la matière active de l'électrode négative, la concentration en lithium restant ainsi constante dans l'électrolyte. L'insertion du lithium dans l'électrode positive est compensée par apport d'électrons à partir de l'électrode négative *via* un circuit extérieur. Lors de la charge, les phénomènes inverses ont lieu.

Le fonctionnement des batteries Li-ion flexibles est le même que celui susmentionné pour les batteries Li-ion classiques. Cependant, afin d'obtenir une batterie flexible ou pliable, il convient de développer, en sus, des électrodes présentant non seulement une forte conductivité, mais aussi dans lesquelles la couche de matière active présente une forte adhésion au substrat, ce qui permet d'éviter l'apparition de fissures, voire le décollement de la matière active après flexion de la batterie.

Divers procédés de fabrication d'électrodes flexibles ont été proposés dans la littérature. En particulier, dans la demande de brevet FR 2 981 206 A1, des anodes autosupportées présentant une flexibilité améliorée ont été fabriquées par filtration sur une toile de filtration d'une pâte aqueuse obtenue par dispersion d'un mélange de particules solides comprenant de la poudre de graphite et des fibres de cellulose raffinées dans une phase aqueuse. Ce procédé utilise des matières premières respectueuses de l'environnement et permet la réalisation de batteries Li-ion présentant de bonnes performances électrochimiques. Cependant, l'étape de filtration nécessite que ledit mélange de particules solides représente seulement 0,02 à 5% en masse de la masse totale de la pâte aqueuse. Cette étape implique donc l'utilisation de grands volumes de phase aqueuse, rendant plus complexe l'industrialisation dudit procédé. Au-delà de 5% en masse de mélange de particules solides dans la pâte aqueuse, l'étape de filtration devient plus lente, entraînant des coûts de production plus élevés. Par ailleurs, il semble d'après les résultats présentés qu'au moins 10% de fibres de cellulose raffinées soient nécessaires pour obtenir des anodes possédant de bonnes propriétés mécaniques tout en conservant une conductivité suffisante.

La fabrication d'électrodes flexibles de type nanotubes de carbones (CNT)/Li₄Ti₅O₁₂ (LTO) ou nanotubes de carbones (CNT)/LiCoO₂ (LCO) par un procédé d'enduction a également été proposée *[*ACS nano, 2010, 4, 10, 5843-5848]. Les électrodes sont obtenues :
- en enduisant un substrat SS (en inox) par une encre aqueuse comprenant des CNT et un tensioactif dodécylbenzènesulfonate afin de recouvrir le substrat SS par un film de nanotubes de carbone (composé SS/CNT),
- en enduisant la surface libre dudit film de nanotubes de carbone par un mélange comprenant LTO ou LCO, du carbone Super P et un liant polymère PVdF
   dans un solvant organique NMP (N-méthyl-2-pyrrolidone), afin d'obtenir le composé SS/CNT/LTO ou SS/CNT/LCO), et
- en immergeant ledit composé SS/CNT/LTO ou SS/CNT/LCO dans de l'eau déionisée afin de retirer aisément du substrat SS la bicouche CNT/LTO (anode) ou CNT/LCO (cathode).

Avant d'assembler les électrodes avec le séparateur pour former une batterie plate, les électrodes CNT/LTO et CNT/LCO sont découpées au format désiré (Fig. S5, partie « Supporting information »). Cette étape de découpe afin d'obtenir des formes variables de batteries induit cependant une perte de matière non négligeable, rendant le procédé d'enduction trop coûteux. Par ailleurs, ce procédé de fabrication d'électrodes utilise des composés (liant polymère synthétique, solvant organique, tensioactifs) qui ne sont pas très respectueux de l'environnement. En outre, le substrat utilisé pour la préparation des électrodes bicouches est retiré et n'est pas recyclé lors de la fabrication de la batterie en tant que séparateur par exemple. Or, la tendance actuelle est, au contraire, de trouver des techniques de production qui aient un impact le plus faible possible sur le plan environnemental et d'obtenir des dispositifs/batteries qui soient facilement recyclables. Enfin, la couche de nanotubes de carbone (CNT) joue le rôle de collecteur de courant. Tous les tests en demi-pile sont réalisés avec l'électrode bicouche c'est-à-dire en présence d'un collecteur de courant. Cela permet d'obtenir des performances électrochimiques nettement améliorées (capacité spécifique de 147 mAh/g pour CNT/LTO) par rapport à des tests en demi-pile sans collecteur de courant (sans CNT).

Face à la croissance de la demande en sources d'énergies autonomes pour des applications nécessitant la réalisation d'accumulateurs Lithium-ion d'architectures variées et novatrices, il a été récemment proposé des procédés d'impression d'électrodes de manière à réaliser des motifs d'électrode à la demande. En particulier, la demande de brevet FR 2 965 107 A1 propose la préparation d'une encre aqueuse pour la réalisation d'électrodes par impression, comprenant au moins un matériau actif d'électrode et au moins un polymère conducteur hydrosoluble ou hydrodispersable tel que l'association PEDOT/PSS (poly(3,4-éthylènedioxythiophène)/poly(styrène sulfonate) de sodium). L'encre est déposée par impression sur un collecteur de courant métallique. Cependant, un tel procédé présente l'inconvénient d'utiliser un liant très corrosif et les performances électrochimiques des électrodes préparées par impression ne sont pas décrites.

Le document WO 03/069700 A2 décrit un procédé de préparation d'une électrode négative de zinc supportée par un substrat polymère flexible, par technique d'impression. Il met en oeuvre une encre d'électrode comprenant du polyvinylpyrrolidone à titre de liant.

Le document EP 0 028 879 A2 décrit un procédé de préparation d'une électrode négative de zinc pour une batterie alcaline nickel-zinc, par application manuelle d'une pâte d'électrode sur une grille de collecteur de courant. Il met en oeuvre une pâte d'électrode comprenant des fibres de cellulose naturelle à titre de liant.

Le but de la présente invention est de fournir un procédé d'impression ou de dépôt par atomisation pour la préparation d'électrodes flexibles supportées et également un procédé de fabrication d'une batterie lithium-ion.

En particulier, la présente invention a pour but de pallier tout ou en partie les inconvénient précités et de fournir un procédé économique, rapide et simple de fabrication d'électrodes flexibles supportées de formes variables, qui emploie des matières premières peu coûteuses, recyclables et non toxiques, qui soit aisément industrialisable, qui réduise les pertes en matériaux, tout en permettant la réalisation de batteries souples au lithium présentant de bonnes performances électrochimiques et étant faciles à assembler.

La présente invention a donc pour premier objet un procédé de préparation d'une électrode flexible supportée comprenant au moins une matière active d'électrode, au moins un liant, et au moins un substrat flexible, ledit procédé comportant au moins les étapes suivantes :
i) une étape de préparation d'une encre d'électrode par dispersion d'un mélange de particules solides dans une phase aqueuse, ledit mélange de particules solides comprenant :
   - au moins une matière active d'électrode, en une quantité variant de 70 à 99,5% en masse environ par rapport à la masse totale du mélange de particules solides,
   - au moins un liant comprenant un matériau ligno-cellulosique, en une quantité variant de 0,5 à 30% en masse environ par rapport à la masse totale du mélange de particules solides,
   ledit mélange de particules solides représentant au moins 25% en masse environ de la masse totale de l'encre d'électrode ;
ii) une étape de transfert de l'encre d'électrode obtenue ci-dessus à l'étape i) sur au moins une partie d'une des faces d'un substrat flexible par technique d'impression ou de dépôt par atomisation, ledit substrat flexible étant choisi parmi un substrat cellulosique, un film polymère et une membrane polymère éventuellement renforcée avec de la cellulose ; et
iii) une étape de séchage pour obtenir une électrode flexible supportée comprenant le substrat flexible et un film d'électrode déposé sur au moins une partie d'une des faces dudit substrat flexible.

La société Demanderesse a ainsi découvert, et ce de manière surprenante, un procédé simple, rapide, peu onéreux et respectueux de l'environnement permettant de préparer à la fois des électrodes fines et flexibles et des batteries Li-ion flexibles. Pour cela, le liant de l'électrode comprend un matériau ligno-cellulosique qui permet d'emprisonner la matière active de l'électrode tout en lui conférant d'excellentes propriétés mécaniques. Le procédé d'impression ou de dépôt par atomisation est rapide, à base d'une phase liquide telle que de l'eau, et exempt de polymères synthétiques ou de solvant organique ou de plastifiant. Ce procédé est facilement adaptable à l'échelle industrielle puisqu'il permet d'augmenter les cadences de production, de réduire les pertes en matériaux et de réaliser des motifs d'électrodes variés à la demande. En outre, comme cela est démontré dans les exemples illustrant la présente demande, les demi-cellules de cathodes et d'anodes préparées conformément au procédé de l'invention montrent de très bonnes capacités de charge/décharge spécifiques et de bonnes performances cycliques comparées aux résultats reportés dans la littérature notamment lorsqu'un procédé de filtration ou un procédé d'enduction est mis en oeuvre.

Selon l'invention, le matériau ligno-cellulosique peut être choisi parmi les fibres de celluloses, les fibres de celluloses raffinées, les microfibrilles de cellulose, les nanofibrilles de cellulose, la lignine et ses dérivés. Les fibres de celluloses, les fibres de celluloses raffinées, les microfibrilles de cellulose et les nanofibrilles de cellulose présentent respectivement des tailles de fibres de plus en plus réduites (d'environ 2 mm de longueur pour les fibres de cellulose à environ 100 nm de longueur pour les nanofibrilles de cellulose). Plus la taille des fibres est petite, plus leur surface spécifique est grande, favorisant ainsi leur interaction avec les particules de matière active qui entre dans la composition de l'électrode.

Selon une forme de réalisation préférée de l'invention, le matériau ligno-cellulosique est sous forme de fibres ou d'éléments fibreux de longueur strictement inférieure à 1 mm. De telles fibres peuvent être choisies parmi les fibres de celluloses raffinées, les microfibrilles de cellulose, et les nanofibrilles de cellulose.

Les fibres ont de préférence, une longueur inférieure ou égale à 0,5 mm, et de préférence encore inférieure ou égale à 0,2 mm.

De telles fibres permettent de conduire à une encre d'électrode tout à fait compatible avec la technique d'impression ou de dépôt par atomisation utilisée lors de l'étape ii). En effet, l'utilisation de fibres de telles longueurs permet d'éviter lors de l'étape ii), l'obstruction de l'écran utilisé en sérigraphie, ou l'obstruction des alvéoles des cylindres tramés alimentant le groupe d'impression de flexographie, ou le colmatage des buses utilisées lors du dépôt par atomisation.

Les microfibrilles de cellulose sont particulièrement préférées.

Selon l'invention, on entend par fibres de cellulose raffinées, des fibres ayant un degré Schopper-Riegler (°SR) variant de 30 à 95°SR environ. Cette caractéristique physique est issue de l'industrie du papier et permet de quantifier le degré de raffinage des fibres de cellulose. Le raffinage se mesure donc en degrés Schopper-Riegler (°SR), ce qui correspond à un indice d'égouttage (plus une pâte retient l'eau, plus elle est raffinée). Le degré de raffinage Schopper-Riegler est déterminé par une mesure de l'égouttabilité de la pâte selon la méthode décrite dans la norme ISO 5267. L'essai Schopper-Riegler est conçu pour donner la mesure de la vitesse à laquelle l'eau peut être extraite d'une suspension de pâte diluée. Il a été démontré que l'égouttabilité est fonction de l'état de la surface et du gonflement des fibres, et qu'elle constitue un indice représentatif de l'intensité du traitement mécanique subi par la pâte.

Les fibres de cellulose raffinées ont subi un traitement mécanique appelé raffinage afin d'augmenter leur potentiel de liaison et de diminuer leur taille, les rendant ainsi particulièrement appropriées pour être utilisées dans l'encre d'électrode telle que préparée à l'étape i).

Selon une forme de réalisation préférée de l'invention, les fibres de cellulose raffinées sont obtenues selon le procédé de raffinage décrit dans la demande de brevet FR 2 981 206 A1.

Selon une forme de réalisation préférée de l'invention, les fibres de cellulose raffinées (FBr) présentent un degré Schopper-Riegler d'au moins 60°SR, de manière encore plus préférée d'au moins 80°SR.

Dans un mode de réalisation particulier, le liant comprenant un matériau ligno-cellulosique représente de préférence de 0,5 à 5% en masse environ, et encore plus préférentiellement de 0,5 à 1,5% en masse environ par rapport à la masse totale du mélange de particules solides.

En effet, cette quantité faible de liant permet à la fois d'optimiser la quantité de matière active qui doit être la plus élevée possible pour garantir une capacité spécifique expérimentale proche de la capacité spécifique théorique de la batterie, tout en garantissant son effet liant, et ainsi ses propriétés mécaniques.

La phase aqueuse est de préférence constituée par de l'eau.

De préférence, un agent anti-floculation des fibres est incorporé à la suspension aqueuse de l'étape i). Cet agent anti-floculation, outre le fait d'éviter la floculation des fibres de cellulose, permet de former à l'étape i) une encre d'électrode homogène, stabilisée, et ayant un comportement rhéologique adapté à la technique d'impression ou de dépôt par atomisation de l'étape ii). Il permet ainsi d'améliorer l'homogénéité et la résistance mécanique des électrodes sèches ainsi que leur conductivité électronique.

Un agent anti-floculation convenant pour la présente invention peut être de la carboxyméthylcellulose (CMC), de l'amidon, l'un de leurs dérivés tel que l'amidon modifié ou leurs mélanges. La carboxyméthylcellulose (CMC) est préférée.

Lorsqu'il est utilisé, l'agent anti-floculation des fibres représente de préférence de 0,5 à 5% en masse environ, et encore plus préférentiellement de 0,5 à 2,5% en masse environ par rapport à la masse totale du mélange de particules solides de l'étape i).

Ainsi, selon une forme de réalisation préférée du procédé conforme à l'invention, ledit mélange de particules solides de l'étape i) comprend :
- une matière active d'électrode, en une quantité variant de 96 à 99% en masse environ par rapport à la masse totale du mélange de particules solides,
- un liant comprenant un matériau ligno-cellulosique, en une quantité variant de 0,5 à 1,5% en masse environ par rapport à la masse totale du mélange de particules solides, et
- un agent anti-floculation des fibres, en une quantité variant de 0,5 à 2,5% en masse environ par rapport à la masse totale du mélange de particules solides.

Ce mélange de particules solides est particulièrement adapté pour préparer une encre d'anode.

La suspension aqueuse de l'étape i) peut en outre renfermer au moins un agent générant une conductivité électronique. L'agent générant une conductivité électronique convenant pour la présente invention est de préférence choisi parmi le noir de carbone, le carbone SP, le noir d'acétylène, les fibres et nanofibres de carbone, les nanotubes de carbone, les particules et fibres métalliques et l'un de leurs mélanges. Le noir de carbone est préféré.

Lorsqu'il est utilisé, l'agent générant une conductivité électronique représente généralement de 10 à 40% en masse environ, de préférence de 25 à 35% environ en masse, par rapport à la masse totale du mélange de particules solides de l'étape i).

Ainsi, selon une forme de réalisation préférée, ledit mélange de particules solides de l'étape i) comprend :
- une matière active d'électrode, en une quantité variant de 61 à 74% en masse environ par rapport à la masse totale du mélange de particules solides,
- un liant comprenant un matériau ligno-cellulosique, en une quantité variant de 0,5 à 1,5% en masse environ par rapport à la masse totale du mélange de particules solides,
- un agent anti-floculation des fibres, en une quantité variant de 0,5 à 2,5% en masse environ par rapport à la masse totale du mélange de particules solides et,
- un agent générant une conductivité électronique, en une quantité variant de 25 à 35% en masse environ par rapport à la masse totale du mélange de particules solides.

Ce mélange de particules solides est particulièrement adapté pour préparer une encre de cathode.

La matière active d'électrode se présente généralement sous forme de particules de dimension moyenne inférieure à 200 µm environ, de préférence de dimension inférieure à 100 µm environ et de manière encore plus préférée de dimension inférieure à 50 µm environ.

Selon une forme de réalisation particulière et préférée du procédé conforme à l'invention, la concentration massique du mélange de particules solides dans l'encre d'électrode à l'issue de l'étape i) varie de 25 à 50% environ et plus préférentiellement varie de 28 à 42% environ.

A l'issue de l'étape i), la viscosité de l'encre d'électrode obtenue, mesurée à l'aide d'un rhéomètre rotatif vendu sous la dénomination commerciale ANTON PAAR MCR 301, va de 0,01 à 100 Pa.s environ à un taux de cisaillement de 1 s⁻¹. La durée de mesure rhéologique correspondant au temps de montée de 1 s⁻¹ à 1000 s⁻¹ est d'environ 5 minutes.

Sauf indication contraire, toutes les valeurs de viscosité indiquées dans la présente demande ont été mesurées dans les conditions indiquées ci-dessus.

Dans un mode de réalisation particulier, la viscosité de l'encre d'électrode obtenue à l'issue de l'étape i) à un taux de cisaillement de 1 s⁻¹, va de préférence, de 0,1 à 50 Pa.s lorsque la technique d'impression utilisée est la sérigraphie ; elle va de préférence de 0,01 à 10 Pa.s lorsque la technique d'impression utilisée est la flexographie ; et elle va de préférence de 0,01 à 0,2 Pa.s lorsque la technique d'impression utilisée est l'héliogravure.

L'encre d'électrode de l'étape i) ne comprend pas de préférence de polymères organiques (e.g. PVdF, PVA), et/ou de solvants organiques (e.g. NMP), et/ou de plastifiants (e.g. carbonates).

Les propriétés rhéologiques de l'encre peuvent être ajustées en fonction de la concentration massique des différents composés dans l'encre d'électrode et du degré de raffinage des fibres de cellulose lorsque ces dernières sont utilisées.

Lorsque le substrat flexible de l'étape ii) est un substrat cellulosique, il est de préférence choisi parmi du papier.

Lorsque le substrat flexible de l'étape ii) est un film polymère, ledit film polymère comprend de préférence au moins un polymère choisi parmi les polymères à base de polyoléfines, de polyesters, de polyamides et leurs mélanges. A titre d'exemple de polymères à base de polyoléfines, on trouve les polypropylènes.

Lorsque le substrat flexible de l'étape ii) est une membrane polymère, ladite membrane polymère comprend de préférence au moins un polymère choisi parmi les polymères photodurcis à base polyéthers. A titre d'exemple de polymères photodurcis à base polyéthers, on trouve les polyoxyéthylènes, les polysiloxanes et les perfluoropolyéthers.

Par « membrane polymère renforcée avec de la cellulose », on entend une membrane polymère telle que définie ci-dessus, comprenant 0,5 à 20 % en masse de cellulose par rapport à la masse totale de membrane polymère renforcée avec de la cellulose.

Tous les substrats flexibles utilisés dans le procédé conforme à l'invention (substrat cellulosique, film polymère, membrane polymère éventuellement renforcée avec de la cellulose) sont des matériaux qui s'opposent au passage des électrons, tout en étant compatibles avec la diffusion des ions, notamment des ions lithium.

Selon une forme de réalisation préférée de l'invention, le substrat flexible utilisé lors de l'étape ii) a une épaisseur variant de 10 à 800 µm environ et encore plus préférentiellement, de 10 à 200 µm environ.

La technique d'impression selon l'étape ii) du procédé conforme à l'invention peut être choisie parmi la sérigraphie, la flexographie et l'héliogravure. L'étape ii) du procédé conforme à l'invention est effectuée préférentiellement par sérigraphie.

Lors de l'étape ii), le transfert de l'encre d'électrode obtenue à l'étape i) sur au moins une partie d'une des faces d'un substrat flexible par technique d'impression ou de dépôt par atomisation est préférentiellement effectuée en un seul passage.

L'étape de séchage iii) du procédé conforme à l'invention est généralement réalisée à une température allant de 50 à 150 °C environ, de préférence de 80 à 120°C environ et encore plus préférentiellement de 90 à 110 °C environ. Cette étape de séchage est généralement réalisée à l'air. Cependant, elle peut également être effectuée sous vide pour favoriser l'élimination rapide de l'eau.

Ainsi, le procédé conforme à l'invention selon les étapes i) à iii) permet d'obtenir une électrode flexible supportée comprenant un substrat flexible et un film d'électrode déposé sur une des faces dudit substrat flexible.

On entend par « film d'électrode » l'encre d'électrode de l'étape i) qui a été déposée sur au moins une partie d'une des faces du substrat flexible selon l'étape ii) et séchée selon l'étape iii).

Dans un mode de réalisation particulier, ledit film d'électrode déposé sur au moins une partie d'une des faces du substrat flexible a une épaisseur variant de 5 à 450 µm environ, et plus préférentiellement de 30 à 100 µm environ.

Dans un mode de réalisation particulier, la dispersion du mélange de particules solides dans une phase aqueuse de l'étape i) est réalisée selon les sous-étapes suivantes :
i-1) l'agent anti-floculation et la phase aqueuse sont mélangés et dispersés à l'aide d'un disperseur à pâles mécaniques, pendant une durée variant de 2 à 10 min environ à une vitesse variant de 450 à 550 trs/min environ,
i-2) le liant comprenant un matériau ligno-cellulosique est ajouté au mélange obtenu ci-dessus à l'étape i-1), puis le mélange résultant est dispersé pendant une durée variant de 5 à 20 min environ à une vitesse variant de 450 à 550 trs/min environ,
i-3) la matière active d'électrode et éventuellement l'agent générant une conductivité électronique sont ajoutés au mélange obtenu ci-dessus à l'étape i-2), puis le mélange résultant est dispersé pendant une durée variant de 5 à 20 min environ à une vitesse variant de 450 à 550 trs/min environ,
i-4) le mélange ainsi obtenu à l'étape i-3) est agité mécaniquement à l'aide d'un disperseur à pâles mécaniques, pendant une durée variant de 10 à 25 min environ, à une vitesse variant de 2500 à 3500 trs/min environ.

La vitesse de rotation du disperseur à pâles mécaniques conventionnel utilisé lors des étapes i-2) et i-3) est de préférence diminuée à une vitesse variant de 50 à 150 trs/min environ pendant l'ajout du liant, de la matière active d'électrode et de l'agent générant une conductivité électronique si ce dernier est présent.

Lorsqu'une matière active d'anode est utilisée à l'étape i-3), une sous-étape supplémentaire d'homogénéisation de la dispersion est de préférence insérée entre les étapes i-3) et i-4). Au cours de ladite sous-étape supplémentaire, le mélange obtenu à l'étape i-3) est homogénéisé dans un laminoir tricylindre pendant une durée variant de 5 à 10 minutes environ.

Le procédé conforme à l'invention peut comprendre en outre, une étape iv) de calandrage de l'électrode flexible supportée obtenue selon l'étape iii) du procédé conforme à l'invention. Cette étape iv) permet d'améliorer les propriétés électrochimiques de ladite électrode flexible supportée, notamment en terme de capacité spécifique.

Dans un mode de réalisation particulier, selon les densités d'électrodes souhaitées, la charge linéique de la calandre pendant l'étape iv) de calandrage va de 3 à 100 kg/cm, lorsque les rouleaux de calandre utilisés sont d'environ 180 mm de diamètre et d'environ 300 mm de largeur.

Ainsi, le procédé tel que décrit ci-dessus et conforme à l'invention permet d'obtenir une électrode flexible supportée positive ou négative comprenant au moins une matière active d'électrode, éventuellement au moins un agent générant une conductivité électrique, éventuellement un agent anti-floculation des fibres, au moins un liant comprenant un matériau ligno-cellulosique emprisonnant ladite matière active d'électrode, et au moins un substrat flexible choisi parmi du papier, un film polymère et une membrane polymère renforcée avec de la cellulose.

Dans un mode de réalisation particulier, la matière active d'électrode utilisée lors de l'étape i) du procédé conforme à l'invention et permettant d'obtenir une électrode flexible supportée positive peut être choisie parmi les particules de matière cathodique compatibles avec un milieu aqueux et avec un diamètre < 200 µm, de préférence < 100 µm et encore plus préférentiellement < 50 µm. Des exemples de matières cathodiques pouvant être utilisées dans la présente invention sont : LiₓMn_{y}O₄ (0<x<2, 0<y<2 et x+y=3), LiCoO₂, LiMPO₄, (M = Fe, Mn, Co, Ni), LiAlₓCo_{y}Ni_{z}O₂ (0<x<1, 0<y<1, 0<z<1 et x+y+z=1), LiNl_{(1-y)}Co_{y}O₂ (0≤y≤1), etc...

Dans un mode de réalisation particulier, la matière active d'électrode utilisée lors de l'étape i) du procédé conforme à l'invention et permettant d'obtenir une électrode flexible supportée négative peut être choisie parmi les particules de matière anodique compatibles avec l'eau et avec un diamètre < 200 µm, de préférence < 100 µm et encore plus préférentiellement < 50 µm. Des exemples de matières anodiques sont : le graphite, le carbone dur, le carbone mou, les alliages métallique du type Li_{Y}M (1<y<5 et M = Mn, Sn, Pb, Si, In, Ti) etc...

La présente invention a également pour second objet un procédé de fabrication d'une batterie lithium-ion.

Selon une première variante, ledit procédé conduit à une batterie lithium-ion comprenant :
- une électrode flexible supportée positive comprenant un substrat flexible S1 et un film de cathode F1 déposé sur au moins une partie d'une des faces dudit substrat flexible S1, et
- une électrode flexible supportée négative comprenant un substrat flexible S2 et un film d'anode F2 déposé sur au moins une partie d'une des faces dudit substrat flexible S2,
- un électrolyte gel ou un électrolyte liquide placé entre lesdites électrodes, et ledit procédé comprenant au moins les étapes suivantes :
   a) une étape de préparation d'une électrode flexible supportée positive selon les étapes i), ii), iii) et éventuellement l'étape iv) du procédé conforme au premier objet de l'invention,
   b) une étape de préparation d'une électrode flexible supportée négative selon les étapes i), ii), iii) et éventuellement l'étape iv) du procédé conforme au premier objet de l'invention,
   c) une étape d'assemblage des électrodes telles qu'obtenues ci-dessus aux étapes a) et b), de manière à ce que lesdits substrats flexibles S1 et S2 soient placés face à face dans ladite batterie, formant ainsi un séparateur S1-S2 entre le film de cathode F1 et le film d'anode F2, et l'une ou l'autre des étapes suivantes :
      d-1) une étape d'imprégnation des électrodes telles qu'assemblées ci-dessus à l'étape c) par l'électrolyte liquide, ou
      d-2) une étape d'encapsulation de l'électrolyte gel dans chacun des substrats flexibles S1 et S2, ladite étape d'encapsulation étant préalable aux étapes a) et b) de préparation des électrodes.

Cette première variante permet ainsi d'obtenir une batterie dans laquelle le séparateur est constitué par les substrats flexibles S1 et S2 et évite ainsi l'utilisation d'un séparateur supplémentaire. Par ailleurs, ce procédé ne comprend qu'une seule étape d'assemblage au lieu des deux étapes d'assemblage généralement décrites dans l'art antérieur.

Selon cette première variante du procédé de fabrication d'une batterie lithium-ion tel que défini ci-dessus et conforme à l'invention, les substrats flexibles S1 et S2 peuvent être identiques ou différents, et sont de préférence choisis parmi un substrat cellulosique, un film polymère et une membrane polymère éventuellement renforcée avec de la cellulose.

L'étape d-1) d'imprégnation des électrodes telles qu'assemblées à l'étape c) par l'électrolyte liquide, peut être effectuée par exemple, lorsque chacun desdits substrats flexibles S1 et S2 est choisi parmi un substrat cellulosique et un film polymère.

L'étape d-2) d'encapsulation de l'électrolyte gel dans chacun des substrats flexibles S1 et S2, peut être réalisée par exemple, lorsque chacun desdits substrats flexibles S1 et S2 est une membrane polymère éventuellement renforcée avec de la cellulose.

Selon une deuxième variante, ledit procédé conduit à une batterie lithium-ion comprenant :
- une électrode flexible supportée positive comprenant un substrat flexible S1 et un film de cathode F1 déposé sur au moins une partie d'une des faces dudit substrat flexible S1, et
- une électrode flexible supportée négative comprenant ledit substrat flexible S1 et un film d'anode F2 déposé sur au moins une partie de l'autre face dudit substrat flexible S1,
- un électrolyte gel ou un électrolyte liquide placé entre lesdites électrodes, et ledit procédé comprenant au moins les étapes suivantes :
   a) une étape de préparation d'une électrode flexible supportée positive selon les étapes i), ii), iii) et éventuellement l'étape iv) du procédé conforme au premier objet de l'invention, de manière à obtenir un film de cathode F1 déposé sur au moins une partie d'une des faces dudit substrat flexible S1,
   b) une étape de préparation d'une électrode flexible supportée négative selon les étapes i), ii), iii) et éventuellement l'étape iv) du procédé conforme au premier objet de l'invention, de manière à obtenir un film d'anode F2 déposé sur au moins une partie de l'autre face dudit substrat flexible S1, ledit substrat flexible S1 formant ainsi un séparateur S1 entre le film de cathode F1 et le film d'anode F2, et l'une ou l'autre des étapes suivantes :
      d-1) une étape d'imprégnation des électrodes telles qu'obtenues ci-dessus à l'étape b) par l'électrolyte liquide, ou
      d-2) une étape d'encapsulation de l'électrolyte gel dans le substrat flexible S1, ladite étape d'encapsulation étant préalable aux étapes a) et b) de préparation des électrodes.

Ainsi, selon cette deuxième variante, les étapes a) et b) sont réalisées en utilisant le même substrat flexible S1. Dans ce cas, les étapes i) à iii) et éventuellement iv) sont réalisées une première fois avec une encre de cathode de manière à obtenir un film de cathode F1 sur au moins une partie d'une des faces du substrat flexible S1 et une seconde fois avec une encre d'anode de manière à obtenir un film d'anode F2 sur au moins une partie de l'autre face dudit substrat flexible S1.

Cette deuxième variante permet ainsi d'obtenir directement une batterie « recto-verso » et de s'affranchir de l'étape c) d'assemblage.

Selon cette deuxième variante du procédé de fabrication d'une batterie lithium-ion tel que défini ci-dessus et conforme à l'invention, le substrat flexible S1 est de préférence choisi parmi un substrat cellulosique, un film polymère et une membrane polymère éventuellement renforcée avec de la cellulose.

L'étape d-1) d'imprégnation des électrodes telles qu'obtenues à l'étape c) par l'électrolyte liquide, peut être effectuée par exemple, lorsque le substrat flexible S1 est choisi parmi un substrat cellulosique et un film polymère.

L'étape d-2) d'encapsulation de l'électrolyte gel dans le substrat flexible S1, peut être réalisée par exemple, lorsque ledit substrat flexible S1 est une membrane polymère éventuellement renforcée avec de la cellulose.

Dans le procédé de fabrication d'une batterie lithium-ion conforme à l'invention tel que défini ci-dessus selon les deux variantes, lesdits substrats flexibles S1 et S2 sont aptes à être utilisés comme séparateur et doivent être constitués d'un matériau compatible avec la diffusion des ions, notamment des ions lithium, mais qui s'oppose au passage des électrons.

Dans un mode de réalisation encore plus préféré, les substrats flexibles S1 et S2 selon la première variante ou le substrat flexible S1 selon la deuxième variante sont en papier. Ainsi le procédé permet d'obtenir une batterie flexible « tout papier » et sera elle-même recyclable et respectueuse de l'environnement.

L'électrolyte liquide utilisé dans le procédé de fabrication d'une batterie lithium-ion conforme à l'invention, peut être constitué d'un sel de lithium en solution dans un solvant liquide choisi pour optimiser le transport et la dissociation des ions.

L'électrolyte gel utilisé dans le procédé de fabrication d'une batterie lithium-ion conforme à l'invention, peut être constitué d'un sel de lithium dans un solvant liquide gélifié par addition d'un polymère obtenu par exemple à partir d'un ou plusieurs monomères choisis parmi l'oxyde d'éthylène, l'oxyde de propylène, le méthacrylate de méthyle, l'acrylate de méthyle, l'acrylonitrile, le méthacrylonitrile, et le fluorure de vinylidène, ledit polymère ayant une structure de type linéaire, de type peigne, statistique, alterné ou à bloc, réticulé ou non.

Le sel de lithium peut être choisi par exemple parmi LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃, LiN(SO₂CF₃)₂, et LiN(SO₂F)₂.

Le solvant liquide peut comprendre un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène, le carbonate de propylène, le carbonate de diméthyle, le carbonate de diéthyle et le carbonate de méthyle et d'éthyle.

La présente invention est illustrée par les exemples ci-après, auxquels elle n'est cependant pas limitée.

Les matières premières utilisées dans les exemples, sont listées ci-après :
- Poudre de graphite synthétique (GP) présentant une dimension moyenne de particule de 12 µm et une surface spécifique de 9,5 m²/g,
- Carboxyméthylcellulose (CMC) de masse moléculaire moyenne en poids de 90 000 g.mol⁻¹ et de degré de substitution de 0,7,
- N-méthyl-2-pyrrolidone (NMP) et Hexafluorophosphate de lithium (LiPF₆),
- Polyfluorure de vinylidène (PVdF),
- Carbonate d'éthylène (EC), Carbonate de propylène (PC) et Carbonate de diméthyle (DMC), qualité batterie (« *grade battery* »),
- Microfibrilles de cellulose (MFC) présentant des longueurs de fibres allant de 1 à 10 µm,
- Poudre de lithium fer phosphate (LiFePO₄),
- Noir de carbone (NC),
- Substrat flexible papier présentant une épaisseur de 140 µm, une porosité d'environ 45% et une perméabilité à l'air selon la méthode Gurley de 2 secondes/10 ml.
Tous les matériaux ont été utilisés tels que reçus.

### Exemple 1

### Préparation d'une électrode négative (anode) par sérigraphie et caractérisations

L'étape i) du procédé conforme à l'invention a été réalisée trois fois selon les sous-étapes suivantes pour obtenir trois encres d'anodes identiques :
0,5 g de CMC a été dispersé dans 36 ml d'eau déionisée à l'aide d'un disperseur à pâles mécaniques vendu sous la dénomination RW 14 par la société IKA®, pendant 5 min à une vitesse de 500 trs/min.

La vitesse du disperseur a été ensuite diminuée à 100 trs/min et 0,2 g de MFC a été ajouté dans le disperseur. Le mélange résultant a été laissé disperser pendant 10 min à une vitesse de 500 trs/min.

La vitesse du disperseur a ensuite été diminuée à 100 trs/min et 23 g de GP ont été ajoutés dans le disperseur. Le mélange résultant a été laissé disperser pendant 10 min à une vitesse de 500 trs/min.

Puis, le mélange obtenu a été homogénéisé pendant 5 minutes à l'aide d'un laminoir tricylindre vendu sous la dénomination commerciale EXACT 50i par la société EXACT®.

Enfin, ledit mélange a été agité à une vitesse de 3000 trs/min pendant 15 minutes, à l'aide d'un disperseur vendu sous la dénomination CV2 - SIP par la société DISPERMAT®.

Chacune des encres d'anode obtenue était composée de 1% en masse de MFC, 2% en masse de CMC et 97% en masse de GP. Par ailleurs, la concentration massique du mélange de particules solides dans l'encre d'électrode à l'issue de l'étape i) était de 40%.

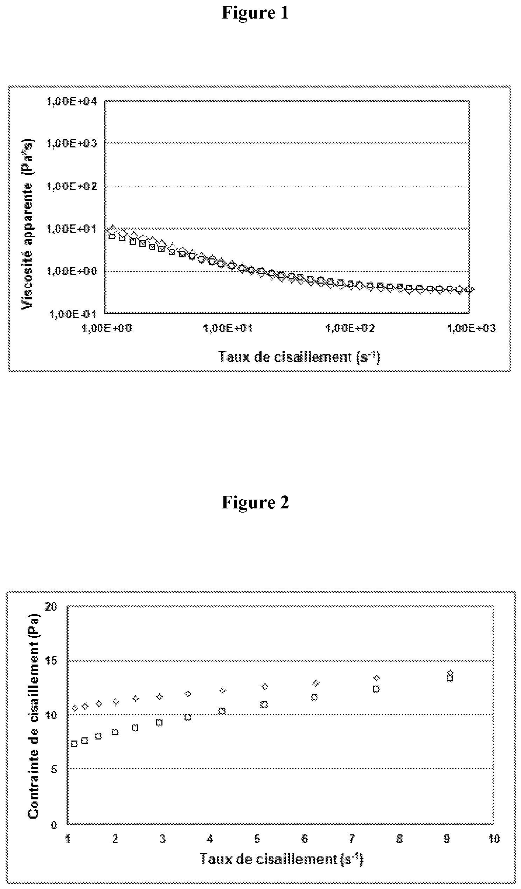

La figure 1 annexée montre l'évolution de la viscosité apparente (en pascal.seconde, Pa.s) en fonction de la vitesse de cisaillement (en seconde⁻¹, s⁻¹). La courbe avec les losanges vides traduit le comportement de l'encre au repos et la courbe avec les carrés vides traduit le comportement de l'encre après cisaillement. La figure 1 montre l'absence de cycle d'hystérésis entre la courbe de l'encre au repos et la courbe de l'encre après cisaillement, ce qui met en évidence l'effet liant de la MFC et l'effet dispersant de la CMC.
La figure 2 annexée montre l'évolution de la contrainte de cisaillement (en pascal, Pa) en fonction de la vitesse de cisaillement (en seconde⁻¹, s⁻¹). La courbe avec les losanges vides traduit le comportement de l'encre au repos et la courbe avec les carrés vides traduit le comportement de l'encre après cisaillement.

D'après les figures 1 et 2, il est possible de conclure que l'encre obtenue présente une viscosité à un taux de cisaillement de 1 s⁻¹ de 10 Pa.s et une contrainte de cisaillement seuil de 9 Pa. Une encre présentant ces caractéristiques peut être avantageusement déposée sur un substrat flexible par une technique d'impression telle que la sérigraphie.

L'impression par d'autres techniques d'impression telles que la flexographie et l'héliogravure nécessitent des encres d'électrode présentant des viscosités plus faibles à un taux de cisaillement de 1 s⁻¹, de l'ordre de 0,01 à 10 Pa.s pour la flexographie et de 0,01 à 2 Pa.s pour l'héliogravure.

Les trois encres identiques obtenues à l'étape décrite ci-dessus ont ensuite été imprimées selon l'étape ii) du procédé conforme à l'invention.

La technique d'impression utilisée est la sérigraphie et le substrat flexible utilisé est un substrat papier utilisé communément dans l'industrie d'impression offset.

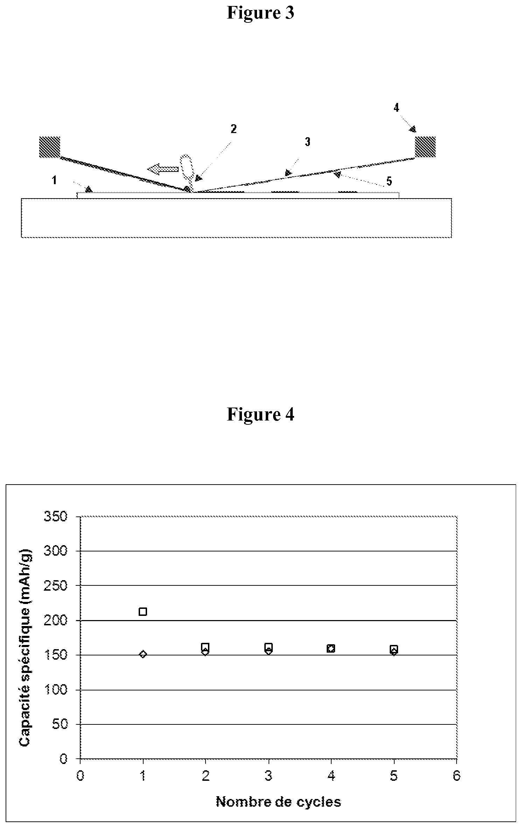

La figure 3 annexée montre le principe de fonctionnement de la sérigraphie. Celle-ci se base sur le transfert d'encre sur un substrat flexible **1** par pression d'une racle **2** sur un écran **3** avec une ouverture de maille fixée de 120 µm. Sur l'écran **3** est placé un cadre **4** comprenant des pochoirs **5,** de manière à ne transférer de l'encre que sur une partie de la surface dudit substrat flexible **1** selon le motif désiré. Selon l'étape ii) du procédé conforme à l'invention, une quantité d'environ 5 g d'encre a été déposée sur l'écran **3,** puis en ajustant la pression appliquée sur la racle **2** et la vitesse de la racle **2,** l'encre a été transférée sur le substrat flexible **1.**

L'appareil de sérigraphie utilisé dans la présente demande est vendu sous la dénomination commerciale HORIZON 03I par la société DEK®.

Une fois imprimées, les trois anodes ont été séchées à 90°C pendant 10 minutes à l'air.

Une fois séchées, deux des anodes ont été respectivement calandrées avec une calandre, en exerçant une charge linéique de 3 kg/cm et de 80 kg/cm à température ambiante.

La troisième anode n'a pas subi d'étape de calandrage.

L'épaisseur de chacun des films d'anode déposée sur chacun des substrats flexibles après un seul passage en sérigraphie a été mesurée avec un micromètre vendu sous la dénomination commerciale M120 par la société ADAMEL LHOMARGY®.

Des mesures de conductivité électrique des anodes obtenues ont été effectuées selon la méthode des quatres pointes (Four Probe measurements) en utilisant un appareil vendu sous la dénomination commerciale JANDEL UNIVERSAL PROBE par la société BRIDGE TECHNOLOGY®.

La porosité des anodes obtenues selon le procédé conforme à l'invention a été calculée expérimentalement à partir du volume total de l'électrode et des volumes respectifs de chacun des composés présents dans l'électrode. Cela a permis de déterminer le volume libre et ainsi, la porosité.

Le tableau 1 ci-dessous présente les résultats d'épaisseur du film d'électrode déposée sur le substrat flexible, de conductivité, et de porosité des trois anodes flexibles supportées obtenues selon le procédé conforme à l'invention.

**TABLEAU 1**

| **Composition anode** | **Epaisseur du film d'électrode (µm)** | **Conductivité (S/m)** | **Porosité (%)** |
|---|---|---|---|
| **Procédé utilisé** | | | |
| GP/CMC/MFC (97/2/1) | 71 ± 3 | 69 ± 22 | 70 ± 3 |
| sérigraphie/pas de calandrage | | | |
| GP/CMC/MFC (97/2/1) | 38 ± 1 | 145 ± 53 | 39 ± 2 |
| sérigraphie/ calandrage à 3 kg/cm | | | |
| GP/CMC/MFC (97/2/1) | 33 ± 2 | 619 ± 57 | 37 ± 3 |
| sérigraphie/calandrage à 80 kg/cm | | | |

L'étape de calandrage comprime les électrodes entre deux rouleaux faiblement compressibles. Comme on peut le voir à travers les résultats du tableau 1, cette étape se traduit par une densification de la structure de l'électrode, et ainsi une réduction de l'épaisseur du film d'électrode déposé sur le substrat flexible et de la porosité. Cette étape permet de favoriser le contact des particules de graphite entre elles et ainsi, la conduction électronique. De ce fait, les résultats du tableau 1 montre que la conductivité électronique est d'autant plus élevée que la pression exercée au cours du calandrage est importante.

Une pastille de diamètre 8 mm a été prélevée dans chacune des électrodes préparée selon le procédé conforme à l'invention. Cette pastille a été séchée sous vide à 100°C pendant 24 heures, afin d'enlever les traces d'eau éventuellement présentes. Une fois séchée, la pastille d'électrode a été introduite dans une boîte à gant sous atmosphère inerte pour la mise en oeuvre des tests électrochimiques tels que décrits ci-dessous.

Des tests électrochimiques en demi-pile, dans une cellule de type Swagelock®, ont été réalisés en utilisant une feuille de lithium de diamètre 8 mm comme contre-électrode, une solution d'hexafluorophosphate de lithium (1 mol/l) dans du EC:PC:DMC (1:1:3, en volume) comme électrolyte, une pastille de 1 cm de diamètre d'une membrane polymère microporeuse ayant une épaisseur de 25 µm, vendue sous la dénomination commerciale CELGARD® 2500 comme séparateur, et la pastille telle qu'obtenue précédemment comme anode.

La cellule de type Swagelock® a subi des cycles de charge (C)-décharge (D) à différents régimes entre 0,02 V et 1,2 V : 5 cycles à C/10-D/10, 10 cycles à C/5-D/5, 10 cycles à C/2-D/2 et 20 cycles à C-D.

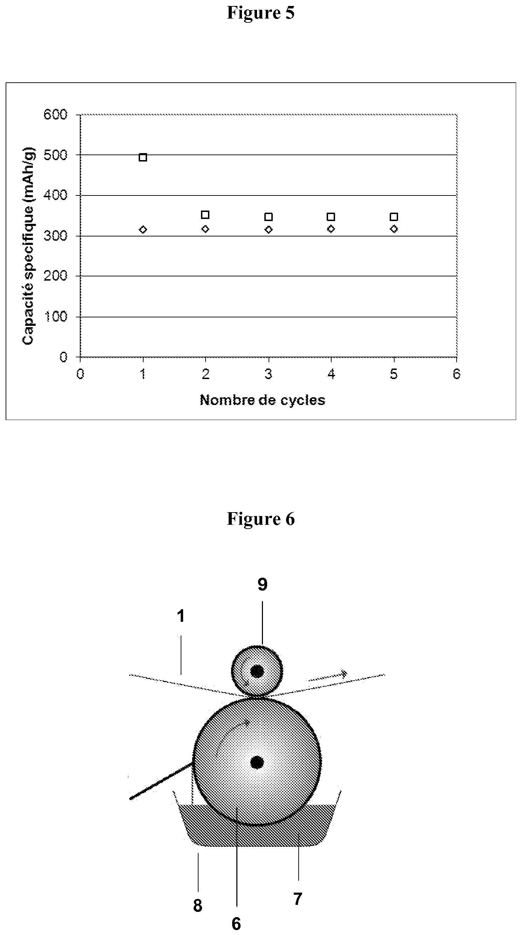

Les mesures de capacité spécifiques pour les anodes calandrées à 3 kg/cm et à 80 kg/cm sont reportées respectivement sur les figures 4 et 5 annexées, figures sur lesquelles la capacité spécifique (en mAh.g⁻¹) est fonction du nombre de cycles avec un régime de courant de C/10. Sur ces figures, les courbes avec les losanges vides correspondent aux mesures effectuées pendant la charge et les courbes avec les carrés vides correspondent aux mesures effectuées pendant la décharge, le calcul étant fait par rapport à la masse de matériau actif d'électrode (GP). D'après la figure 4, l'anode de graphite calandrée à une charge linéique 3 kg/cm présente une capacité spécifique d'environ 150 mAh/g. D'après la figure 5, l'anode de graphite calandrée à une charge linéique 80 kg/cm présente une capacité spécifique d'environ 315 mAh/g. Cette dernière valeur est très proche de la valeur théorique de 350 mAh/g. De plus, lorsque le calandrage est réalisé à 80 kg/cm, la capacité spécifique est peu affectée par le courant de charge/décharge. La résistance au cyclage est, quant à elle, d'au moins 100 cycles à C/5 et D/5.

Ainsi, lorsque l'étape de calandrage est effectuée à une pression élevée, les propriétés électrochimiques de l'anode supportée obtenue selon le procédé conforme à l'invention sont nettement améliorées.

### Exemple 2

### Préparation d'électrodes négatives (anodes) par différentes techniques d'impression

### 2-1) Préparation par héliogravure

L'encre d'anode a été préparée selon le procédé décrit dans l'exemple 1 (étape i) du procédé conforme à l'invention).

L'encre obtenue était composée de 1% en masse de MFC, de 2% en masse de CMC et de 97% en masse de GP. La concentration massique du mélange de particules solides dans l'encre d'électrode à l'issue de l'étape i) était de 29%.

L'encre obtenue a ensuite été imprimée selon l'étape ii) du procédé conforme à l'invention.

L'encre a été appliquée par héliogravure sur un substrat flexible identique à celui utilisé dans l'exemple 1.

La figure 6 annexée montre le principe de fonctionnement de l'héliogravure. Avec cette technique, le motif d'impression est directement gravé à la surface d'un cylindre tramé **6** constitué d'alvéoles (cylindre également connu sous la dénomination anilox). Ledit cylindre tramé **6** est directement mis en contact avec de l'encre **7** se trouvant dans un bac **8.** Une fois encré, le cylindre tramé **6** est mis directement en contact avec le support d'impression **1** (substrat flexible), un cylindre de contre-pression **9** permettant d'exercer la pression adaptée au transfert de l'encre **7.**

Ce type de procédé d'impression est particulièrement adapté lorsque l'on veut fabriquer des électrodes en grandes quantités (cadence élevée, bon transfert d'encre). Il nécessite toutefois un support d'impression lisse.

L'appareil d'héliogravure utilisé dans la présente demande est vendu sous la dénomination commerciale FLEXIPROOF 100 par la société ERICHSEN®. Le cylindre tramé utilisé est caractérisé par un volume théorique de 50 cm³/m². La vitesse d'impression a été fixée à 25 m/min et le nombre d'impressions successives (nombre de passages) a été fixé à 4 afin d'obtenir un dépôt suffisant et homogène.

Une fois imprimée, l'électrode a été séchée à 90°C pendant 10 minutes à l'air.

### 2-2) Préparation par flexographie

L'encre d'anode a été préparée selon le procédé décrit dans l'exemple 1 (étape i) du procédé conforme à l'invention).

L'encre obtenue était composée de 1% en masse de MFC, de 2% en masse de CMC et de 97% en masse de GP. La concentration massique du mélange de particules solides dans l'encre d'électrode à l'issue de l'étape i) était de 29% comme dans le procédé d'héliogravure décrit ci-dessus.

L'encre obtenue a ensuite été imprimée selon l'étape ii) du procédé conforme à l'invention par flexographie, sur un substrat flexible identique à celui utilisé dans l'exemple 1.

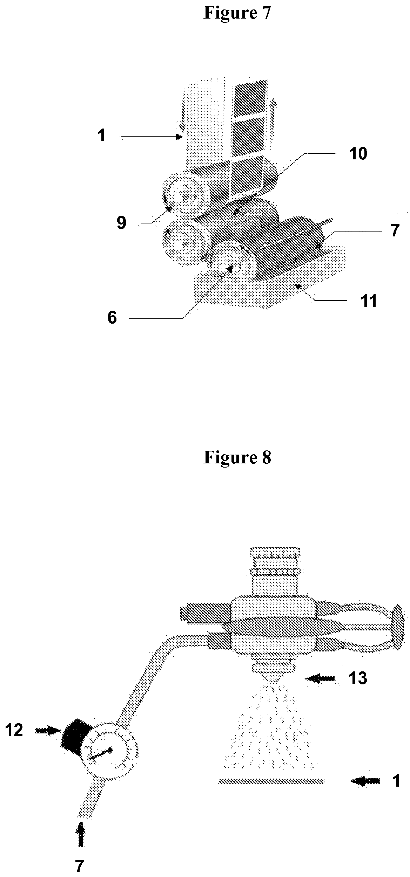

La figure 7 annexée montre le principe de fonctionnement de la flexographie. Ce procédé est proche d'un système de tampographie rotative. L'encre **7** est déposée sur les reliefs d'un cliché compressif **10** (tampon) par l'intermédiaire d'un cylindre tramé **6** constitué d'alvéoles de taille adaptée au type d'impression souhaitée (cylindre également connu sous la dénomination anilox), ledit cylindre tramé étant directement mis en contact avec de l'encre **7** se trouvant dans une chambre à racle **11.** Les reliefs du cliché représentent la forme d'impression désirée. Une fois encré, le cliché **10** est alors mis en contact avec un support d'impression **1** (substrat flexible) par l'intermédiaire d'un cylindre de contre-pression **9.**

Ce procédé présente une grande flexibilité d'utilisation car le cliché compressible est capable de s'adapter à des supports d'impression très différents (carton ondulé, film plastique, etc...).

L'appareil de flexographie utilisé dans la présente demande est vendu sous la dénomination commerciale FLEXIPROOF 100 par la société ERICHSEN®. Le cylindre tramé utilisé est caractérisé par un volume théorique de 50 cm³/m². La vitesse d'impression a été fixée à 25 m/min et le nombre d'impressions successives (nombre de passages) a été fixé à 4 afin d'obtenir un dépôt suffisant et homogène.

Une fois imprimée, l'électrode a été séchée à 90°C pendant 10 minutes à l'air.

### 2-3) Préparation par dépôt par atomisation

L'encre d'anode a été préparée selon le procédé décrit dans l'exemple 1 (étape i) du procédé conforme à l'invention).

L'encre obtenue était composée de 4% en masse de MFC, et de 96% en masse de GP. La concentration massique du mélange de particules solides dans l'encre d'électrode à l'issue de l'étape i) était de 25%.

L'encre obtenue a ensuite été déposée par atomisation selon l'étape ii) du procédé conforme à l'invention, sur un substrat flexible identique à celui utilisé dans l'exemple 1.

La figure 8 annexée montre le principe de fonctionnement de la technique de dépôt par atomisation. Le système utilisé est composé d'une pompe haute pression **12** fonctionnant entre 150 et 200 bars et permettant de faire circuler l'encre **7** vers la buse **13.** La buse **13** présente une section elliptique avec une surface de passage d'environ 0,30 mm². L'encre 7 est dispersée sous forme de fines gouttelettes et projetée sur le substrat flexible **1** placé à environ 30 à 40 cm de la buse **13.**

L'appareil de dépôt par atomisation utilisé dans la présente demande est vendu sous la dénomination commerciale PROJECT PRO 119 par la société WAGNER®.

Le nombre d'atomisations successives (nombre de passages) a été fixé à 8 afin d'obtenir un dépôt suffisant et homogène.

Une fois imprimée, l'électrode a été séchée à 90°C pendant 10 minutes à l'air.

### 2-4) Caractérisations

Le tableau 2 ci-dessous présente les résultats d'épaisseur du film d'électrode déposée sur le substrat flexible, de conductivité, et de porosité des trois anodes flexibles supportées obtenues selon le procédé conforme à l'invention.

**TABLEAU 2**

| **Composition anode** | **Epaisseur du film d'électrode (µm)** | **Conductivité (S/m)** | **Porosité (%)** |
|---|---|---|---|
| **Procédé utilisé** | | | |
| GP/CMC/MFC (97/2/1) | 26 ± 1 | 143 ± 48 | 64 ± 5 |
| héliogravure | | | |
| GP/CMC/MFC (97/2/1) | 10 ± 3 | 76 ± 25 | 72 ± 2 |
| flexographie | | | |
| GP/MFC (96/4) | 400 ± 1 | 244 ± 4 | 48 ± 4 |
| Dépôt par atomisation | | | |

Les résultats présentés dans le tableau 2 montrent que l'héliogravure permet de déposer une quantité d'encre plus importante par rapport à la flexographie (26 µm au lieu de 10 µm) pour un même nombre de passages (4). En effet, l'héliogravure permet un transfert direct de l'encre de l'anilox sur le substrat flexible sans utiliser de cliché d'impression. Il sera cependant possible d'atteindre des épaisseurs déposées plus élevées par flexographie en augmentant le nombre de passages.

Par ailleurs, l'électrode imprimée par héliogravure montre une conductivité électronique plus élevée que l'électrode imprimée par flexographie (143 S/m contre 76 S/m) et comparable à celle obtenue avec une électrode imprimée par sérigraphie ayant subi un calandrage de 3 kg/cm (145 S/m).

Le dépôt par atomisation est quant à lui, d'épaisseur beaucoup plus importante (400 µm) même si l'on double le nombre de passages par rapport à l'héliogravure et la flexographie. L'électrode imprimée par atomisation montre une conductivité électronique élevée (244 S/m) et améliorée par rapport à celle obtenue avec une électrode imprimée par sérigraphie ayant subi un calandrage de 3 kg/cm (145 S/m) ou une électrode imprimée par héliogravure (145 S/m).

Une étape de calandrage telle que décrite dans l'exemple 1, peut être envisagée pour améliorer les résultats obtenus ci-dessus par flexographie et/ou par héliogravure et/ou par dépôt par atomisation.

En termes de coûts de production, la sérigraphie est plus adaptée à des impressions ponctuelles et pour produire des électrodes en petites quantités, feuille d'électrode par feuille d'électrode, puisque la cadence n'est pas aussi élevée que par flexographie ou héliogravure.

La flexographie est utile de préférence, pour des tirages intermédiaires puisqu'elle permet une cadence de production élevée et le cliché (tampon) peut être changé facilement.

L'héliogravure est quant à elle, plus adaptée pour des productions longues d'électrodes et en grosses quantités puisque la gravure du cylindre tramé est onéreuse et nécessite un certain amortissement du coût de production dans le temps.

Le dépôt par atomisation sera quant à elle privilégiée pour des dépôts non sélectifs sur des grandes surfaces.

Par ailleurs, des tests électrochimiques en demi-pile, dans une cellule de type Swagelock^{®}, de même configuration que celle décrite dans l'exemple 1, ont été effectués avec les anodes telles que préparées ci-dessus.

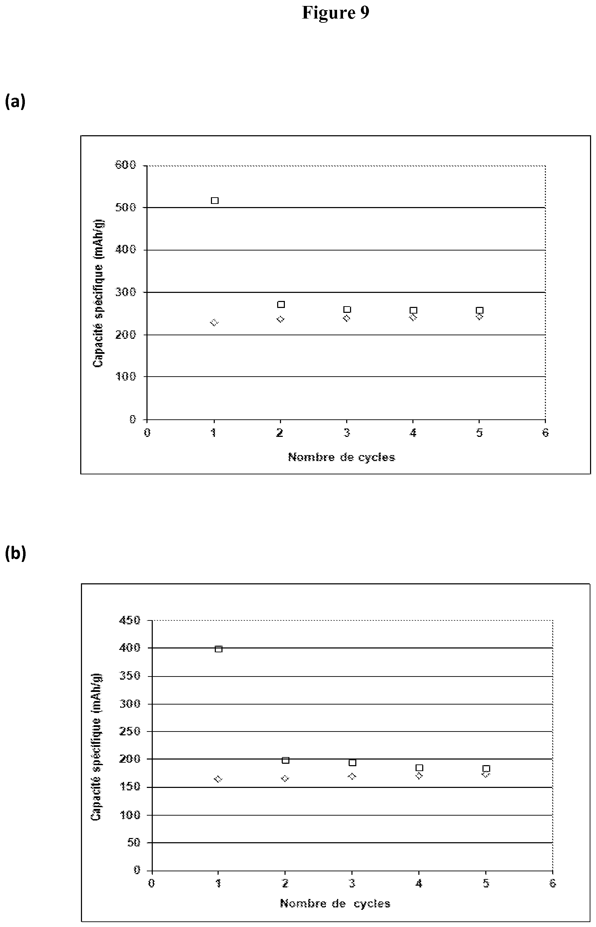

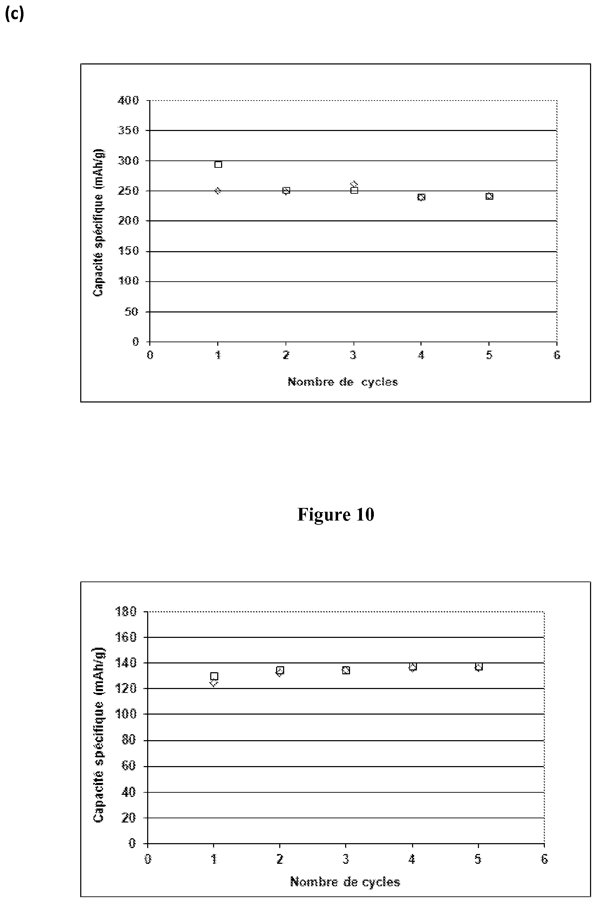

Les mesures de capacités spécifiques correspondantes à C/10 sont reportées respectivement sur les figures 9a, 9b et 9c annexées qui représentent la capacité spécifique (en mAh.g⁻¹) en fonction du nombre de cycles pour l'électrode imprimée par héliogravure, l'électrode imprimée par flexographie et l'électrode obtenue par dépôt par atomisation. Sur ces figures, les courbes avec les losanges vides correspondent aux mesures effectuées pendant la charge et les courbes avec les carrés vides correspondent aux mesures effectuées pendant la décharge, le calcul étant fait par rapport à la masse de matériau actif d'électrode (GP).

Ces résultats montrent que l'anode préparée selon le procédé conforme à l'invention présente une capacité spécifique d'environ 210 mAh/g lorsqu'elle est imprimée par héliogravure, d'environ 150 mAh/g lorsqu'elle est imprimée par flexographie, et d'environ 250 mAh/g lorsqu'elle est obtenue par dépôt par atomisation. Ces valeurs de capacités spécifiques sont proches, voire meilleures par rapport à la valeur de la capacité spécifique mesurée pour l'anode imprimée par sérigraphie et calandrée à 3 kg/cm telle que décrite dans l'exemple 1 (150 mAh/g). De plus, lesdites valeurs peuvent être améliorées en ajoutant une étape de calandrage telle que décrite dans l'exemple 1.

### Exemple 3

### Préparation d'électrodes positives (cathodes) et caractérisations

L'étape i) du procédé conforme à l'invention a été réalisée selon les sous-étapes suivantes :
0,5 g de CMC a été dispersé dans 36 ml d'eau déionisée à l'aide du disperseur à pâles mécaniques décrit dans l'exemple 1 pendant 5 min à une vitesse de 500 trs/min.

La vitesse du disperseur a été ensuite diminuée à 100 trs/min et 0,2 g de MFC a été ajouté dans le disperseur. Le mélange résultant a été laissé disperser pendant 10 min à une vitesse de 500 trs/min.

La vitesse du disperseur a été ensuite à nouveau diminuée à 100 trs/min et 17 g de LFP et 6 g de NC ont été ajoutés dans le disperseur. Le mélange résultant a été laissé disperser pendant 10 min à une vitesse de 500 trs/min.

Enfin, ledit mélange a été agité à une vitesse de 3000 trs/min pendant 15 minutes, toujours à l'aide du disperseur décrit dans l'exemple 1.

L'encre de cathode obtenue était composée de 1% en masse de MFC, de 2% en masse de CMC, de 70% en masse de LFP et de 27% en masse de NC. Par ailleurs, la concentration massique du mélange de particules solides dans l'encre d'électrode à l'issue de l'étape i) était de 40%.

L'encre obtenue présente une viscosité de 56 Pa.s à un taux de cisaillement égal a 1 s⁻¹ et une contrainte de cisaillement seuil de 46 Pa. Une encre présentant ces caractéristiques peut être avantageusement déposée sur un substrat flexible par une technique d'impression telle que la sérigraphie.

L'encre obtenue à l'étape décrite ci-dessus a ensuite été imprimée selon l'étape ii) du procédé conforme à l'invention par sérigraphie, sur un substrat flexible identique à celui utilisé dans l'exemple 1.

Une fois imprimée, l'électrode a été séchée à 90°C pendant 10 minutes à l'air.

Les mesures d'épaisseur du film d'électrode déposé sur le substrat flexible après un seul passage en sérigraphie, de conductivité électrique, et de porosité des cathodes ont été effectuées comme décrit dans l'exemple 1 et sont répertoriées dans le tableau 3 ci-dessous :

**TABLEAU 3**

| **Composition cathode** | **Epaisseur du film d'électrode (µm)** | **Conductivité (S/m)** | **Porosité (%)** |
|---|---|---|---|
| **Procédé utilisé** | | | |
| LFP/NC/CMC/MFC (70/27/2/1) | 35 ± 3 | 35 ± 2 | 68 ± 3 |
| sérigraphie/pas de calandrage | | | |

Par ailleurs, des tests électrochimiques en demi-pile, dans une cellule de type Swagelock®, de même configuration que celle décrite dans l'exemple 1 (sauf en ce qui concerne les cycles de charge (C)-décharge (D) qui ont été réalisés entre 2,1 V et 4 V), ont été effectués avec la cathode préparée ci-dessus.

Les mesures de capacité spécifiques correspondantes à C/10 sont reportées sur la figure 10 annexée sur laquelle la capacité spécifique (en mAh.g⁻¹) est fonction du nombre de cycles. Sur cette figure, la courbe avec les losanges vides correspond aux mesures effectuées pendant la charge et la courbe avec les carrés vides correspond aux mesures effectuées pendant la décharge, le calcul étant fait par rapport à la masse de matériau actif d'électrode (LFP).

Ces résultats montrent que les cathodes préparées selon la procédure mentionnée ci-dessus ont une capacité spécifique d'environ 140 mAh/g (par rapport à la masse de matériau actif LFP), cette capacité spécifique étant proche de la capacité spécifique théorique de LFP qui est de 170 mAh/g.

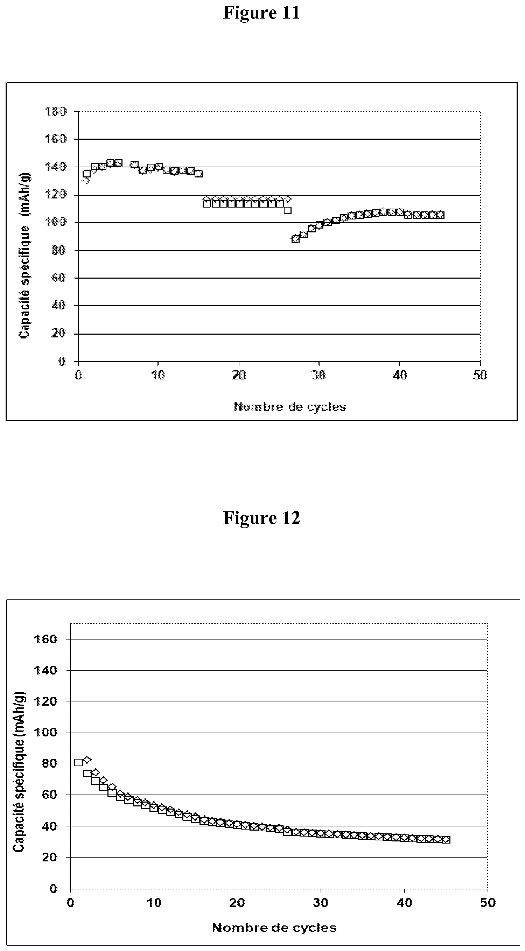

Par ailleurs, les mesures de capacité spécifiques correspondantes à C/10, C/5, C/2 et C sont reportées sur la figure 11 annexée sur laquelle la capacité spécifique (en mAh.g⁻¹) est fonction du nombre de cycles. Sur cette figure, les courbes avec les losanges vides correspondent aux mesures effectuées pendant la charge et les courbes avec les carrés vides correspondent aux mesures effectuées pendant la décharge, le calcul étant fait par rapport à la masse de matériau actif d'électrode (LFP).

La figure 11 montre que la capacité spécifique est peu affectée par le courant de charge/décharge.

### Exemple 4

### Préparation d'électrodes positives (cathodes) par différentes techniques d'impression

### 4-1) Préparation par héliogravure

L'encre de cathode a été préparée selon le procédé décrit dans l'exemple 3 (étape i) du procédé conforme à l'invention).

L'encre de cathode obtenue était composée de 1% en masse de MFC, de 2% en masse de CMC, de 70% en masse de LFP et de 27% en masse de NC. La concentration massique du mélange de particules solides dans l'encre d'électrode à l'issue de l'étape i) était de 36%.

L'encre obtenue a ensuite été imprimée selon l'étape ii) du procédé conforme à l'invention par héliogravure comme décrit ci-dessus dans l'exemple 2, sur un substrat flexible identique à celui utilisé à l'exemple 1.

Une fois imprimée, l'électrode a été séchée à 90°C pendant 10 minutes à l'air.

### 4-2) Préparation par flexographie

L'encre de cathode a été préparée selon le procédé décrit dans l'exemple 3 (étape i) du procédé conforme à l'invention).

L'encre de cathode obtenue était composée de 1% en masse de MFC, de 2% en masse de CMC, de 70% en masse de LFP et de 27% en masse de NC. La concentration massique du mélange de particules solides dans l'encre d'électrode à l'issue de l'étape i) était de 30%.

L'encre obtenue a ensuite été imprimée selon l'étape ii) du procédé conforme à l'invention par flexographie comme décrit ci-dessus dans l'exemple 2, sur un substrat flexible identique à celui utilisé à l'exemple 1.

Une fois imprimée, l'électrode a été séchée à 90°C pendant 10 minutes à l'air.

### 4-3) Caractérisations

Le tableau 4 ci-dessous présente les résultats de mesures d'épaisseur du film d'électrode déposé sur le substrat flexible, de conductivité, et de porosité des deux cathodes flexibles supportées obtenues selon le procédé conforme à l'invention.

**TABLEAU 4**

| **Composition cathode** | **Epaisseur du film d'électrode (µm)** | **Conductivité (S/m)** | **Porosité (%)** |
|---|---|---|---|
| **Procédé utilisé** | | | |
| LFP /NC/CMC/MFC (70/27/2/1) | 19 ± 2 | 25 ± 3 | 65 ± 4 |
| héliogravure | | | |
| LFP /NC/CMC/MFC (70/27/2/1) | 11 ± 1 | 12 ± 1 | 52 ± 2 |
| flexographie | | | |

Comme cela a été observé lors de la préparation des anodes, les valeurs d'épaisseurs de film de cathode déposé sur le substrat flexible montrent que l'impression par héliogravure permet de déposer une plus grande quantité d'encre par rapport à l'impression par flexographie. De plus, la cathode obtenue par héliogravure présente une conductivité électronique plus élevée que lorsqu'elle est obtenue par flexographie. Ceci peut s'expliquer par le fait que dans le cas de l'héliogravure, le dépôt est plus important et permet ainsi de mieux recouvrir toute la rugosité du support d'impression. L'augmentation du nombre d'impressions successives (nombre de passages) par flexographie pourrait permettre d'améliorer la conductivité électronique de la cathode.

Une étape de calandrage telle que décrite dans l'exemple 1 peut également être envisagée pour améliorer les résultats obtenus.

### Exemple 5

### Fabrication d'une batterie lithium-ion dite « recto-verso » comprenant une électrode positive et une électrode négative préparées par sérigraphie

### 5-1) Préparation d'une électrode flexible supportée négative selon l'étape a) du procédé conforme au second objet de l'invention

Une encre d'anode a été préparée selon le procédé décrit dans l'exemple 1 (étape i) du procédé conforme au premier objet de l'invention).

L'encre d'anode obtenue était alors composée de 1% en masse de MFC, 2% en masse de CMC et 97% en masse de GP. Par ailleurs, la concentration massique du mélange de particules solides dans l'encre d'électrode à l'issue de l'étape i) était de 40%.

L'encre d'anode a ensuite été imprimée par sérigraphie sur une des faces d'un substrat flexible S1 identique à celui utilisé dans l'exemple 1, pour obtenir un film d'anode F1 déposé sur une des faces dudit substrat flexible S1 (étape ii) du procédé conforme au premier objet de l'invention).

Une fois imprimée, l'électrode (F1-S1) a été séchée à 90°C pendant 10 minutes à l'air (étape iii) du procédé conforme au premier objet de l'invention).

### 5-2) Préparation d'une électrode flexible supportée positive selon l'étape b) du procédé conforme au second objet de l'invention

Une encre de cathode a été préparée selon le procédé décrit dans l'exemple 3 (étape i) du procédé conforme au premier objet de l'invention).

L'encre de cathode obtenue était composée de 1% en masse de MFC, de 2% en masse de CMC, de 70% en masse de LFP et de 27% en masse de NC. La concentration massique du mélange de particules solides dans l'encre d'électrode à l'issue de l'étape i) était de 40%.

L'encre de cathode a ensuite été imprimée par sérigraphie sur l'autre face du substrat flexible S1, pour obtenir un film de cathode F2 déposé sur l'autre face dudit substrat flexible S1 (étape ii) du procédé conforme au premier objet de l'invention).

Une fois imprimée, l'ensemble (F1-S1-F2) comprenant les électrodes positive et négative, a été séchée à 90°C pendant 10 minutes à l'air.

### 5-3) Imprégnation des électrodes selon l'étape d-1) du procédé conforme au second objet de l'invention

Les électrodes ont été imprégnées par une solution d'hexafluorophosphate de lithium (1 mol/l) dans du EC:PC:DMC (1:1:3, en volume) comme électrolyte liquide.

L'impression recto/verso est rapide et permet d'éviter l'étape d'assemblage des électrodes.

### 5-4) Caractérisations

Le film d'anode F1 présentait une épaisseur de 34 µm environ, et le film de cathode F2 présentait une épaisseur de 89 µm environ.

Une pastille de diamètre 8 mm a été prélevée dans l'ensemble F1-S1-F2 et a été séchée sous vide à 100°C pendant 24 heures, afin d'enlever les traces d'eau éventuellement présentes.

Des tests électrochimiques en batterie complète, dans une cellule de type Swagelock^{®}, ont été réalisés en utilisant la pastille telle qu'obtenue précédemment, imprégnée par une solution d'hexafluorophosphate de lithium (1 mol/l) dans du EC:PC:DMC (1:1:3, en volume) comme électrolyte liquide.

Les mesures de capacités spécifiques correspondantes à C/10, C/5, C/2 et C sont reportées sur la figure 12 annexée sur laquelle la capacité spécifique (en mAh.g⁻¹) est fonction du nombre de cycles. Sur cette figure, les courbes avec les losanges vides correspondent aux mesures effectuées pendant la charge et les courbes avec les carrés vides correspondent aux mesures effectuées pendant la décharge, le calcul étant fait par rapport à la masse de matériau actif d'électrode positive (LFP).

La figure 12 montre que la batterie préparée selon le procédé conforme au second objet de l'invention fonctionne, et est capable de subir des cycles de charge et de décharge à faible taux de courant (C/10) et à plus fort taux de courant (C). La capacité spécifique mesurée par rapport à la masse de matériau actif LFP présente une valeur d'environ 80 mAh/g, qui peut être aisément améliorée par l'ajout notamment d'une étape de calandrage iv).

### Exemple comparatif 1

Une encre destinée à l'élaboration d'une cathode non conforme à l'invention a été préparée comme suit :
3 g de PVdF ont été dispersés dans 18 ml de NMP à l'aide du disperseur à pâles mécaniques tel que décrit dans l'exemple 1 pendant 5 min à une vitesse de 500 trs/min.

La vitesse du disperseur a été ensuite diminuée à 100 trs/min et 14 g de LFP et 5 g de NC ont été ajoutés dans le disperseur. Le mélange résultant a ensuite été agité pendant 10 min à une vitesse de 500 trs/min puis pendant 15 minutes à une vitesse de 3000 trs/min.

L'encre obtenue était composée de 12% en masse de PVdF, de 65% en masse de LFP et de 23% en masse de NC. Par ailleurs, la concentration massique du mélange de particules solides dans l'encre d'électrode était de 55%.

L'encre obtenue présentait une viscosité de cisaillement zéro de 10 Pa.s environ. Une encre présentant ces caractéristiques peut être avantageusement déposée sur un substrat flexible par une technique d'impression telle que la sérigraphie ou par une technique d'enduction.

Le liant PVdF étant toxique, l'étape de transfert par sérigraphie de l'encre de cathode comprenant ledit liant PVdF sur un substrat flexible, nécessite la présence d'une hotte ventilée. Le pilote d'impression par sérigraphie utilisé dans la présente demande étant de taille préindustrielle, il ne peut être placé sous hotte ventilée. Afin de travailler dans des conditions de sécurité optimale, les inventeurs de la présente demande ont donc simulé ledit procédé d'impression par sérigraphie, à l'aide d'un petit appareil d'enduction.

Ainsi, l'encre préparée ci-dessus a été déposée sur un substrat flexible identique à celui utilisé dans les exemples 1 à 5 par une technique d'enduction, en utilisant un filmographe vendu sous la dénomination commerciale 360 par la société ERICHSEN®. Cet appareil peut être mis sous hotte ventilée et possède un réservoir central (6x2x2 cm) muni de quatre ouvertures latérales de 30, 60, 90 et 120 µm respectivement, permettant de déposer un revêtement d'une épaisseur donnée sur un support. Quelques millilitres d'encre sont introduits dans le réservoir, l'ouverture de dépôt souhaitée étant placée à l'opposé du sens d'enduction. Le filmographe est ensuite déplacé manuellement le long du support d'enduction.

Une fois enduite, l'électrode a été séchée à 90°C pendant 10 minutes à l'air.

Afin de pouvoir comparer la cathode de l'exemple 3 préparée selon le procédé conforme à l'invention, avec la cathode telle que préparée ci-dessus selon un procédé non conforme à l'invention, la même épaisseur de film de cathode a été déposée sur le substrat flexible (35 µm).

Les mesures d'épaisseur du film d'électrode déposé sur le substrat flexible après un seul passage en enduction, de conductivité électrique, et de porosité de la cathode ont été effectuées comme décrit dans l'exemple 1 et sont répertoriées dans le tableau 5 ci-dessous. Pour rappel, les valeurs obtenues avec la cathode de l'exemple 3 sont présentées sur la première ligne dudit tableau.

**TABLEAU 5**

| **Composition cathode** | **Epaisseur du film d'électrode (µm)** | **Conductivité (S/m)** | **Porosité (%)** |
|---|---|---|---|
| **Procédé utilisé** | | | |
| LFP/NC/CMC/MFC (70/27/2/1) | 35 ± 3 | 35 ± 2 | 68 ± 3 |
| sérigraphie/pas de calandrage | | | |
| LFP/NC/PVdF (65/23/12) | 35 ± 13 | 33 ± 2 | 56 ± 5 |
| enduction/pas de calandrage (*) | | | |

| | | | |
|---|---|---|---|
| (*) : Electrode comparative ne faisant pas partie de l'invention | | | |

D'après le tableau 5, il est possible de conclure que pour obtenir une électrode supportée de même épaisseur (140+35=175 µm) que l'électrode conforme à l'invention avec des propriétés physico-chimiques équivalentes en termes de conductivité et de porosité, le liant conventionnel PVdF doit être présent dans l'encre d'électrode en une quantité quatre fois plus importante que le mélange liant/agent anti-floculation présent dans l'encre d'électrode conforme à l'invention.

Les inventeurs de la présente demande ont tenté de formuler une encre avec seulement 1 à 3% de liant PVdF. Cependant, cette encre ne présentait pas les caractéristiques rhéologiques adéquates pour pouvoir être déposée sur un substrat flexible par un procédé d'impression ou d'enduction.

De plus, par comparaison avec la technique de sérigraphie, la technique d'enduction manuelle utilisée ne permet pas de déposer de façon uniforme le film d'électrode sur le substrat flexible. Cela introduit des incertitudes de mesure plus grandes sur les valeurs calculées d'épaisseur du film d'électrode, de conductivité, et de porosité de l'électrode.

Par ailleurs, des tests électrochimiques en demi-pile, dans une cellule de type Swagelock^{®} de même configuration que celle décrite dans l'exemple 1, ont été effectués avec la cathode comparative préparée ci-dessus.

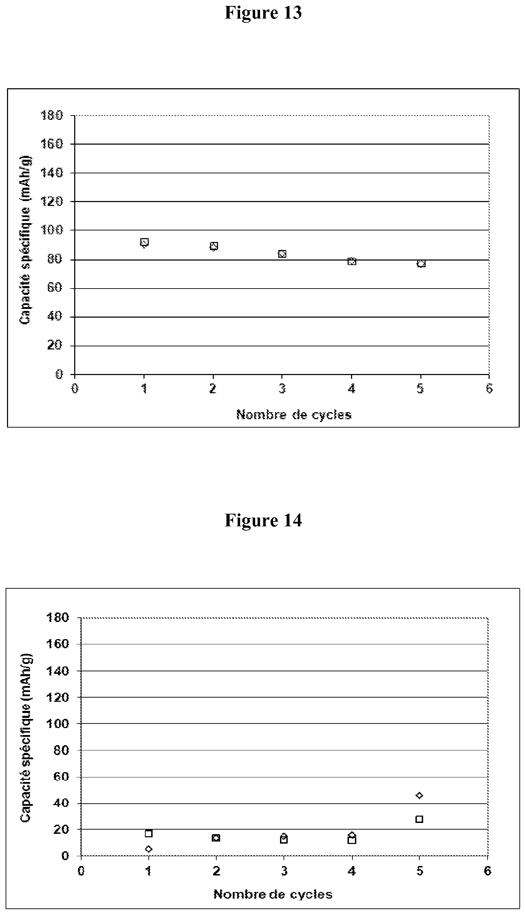

Les mesures de capacité spécifiques correspondantes à C/10 sont reportées sur la figure 13 annexée sur laquelle la capacité spécifique (en mAh.g⁻¹) est fonction du nombre de cycles. Sur cette figure, la courbe avec les losanges vides correspond aux mesures effectuées pendant la charge et la courbe avec les carrés vides correspond aux mesures effectuées pendant la décharge, le calcul étant fait par rapport à la masse de matériau actif d'électrode (LFP).

Ces résultats montrent que les cathodes non conformes à l'invention, c'est-à-dire préparées par enduction selon la procédure mentionnée ci-dessus ont une capacité spécifique d'environ 80 mAh/g (par rapport à la masse de matériau actif LFP), cette capacité spécifique étant nettement inférieure à celle obtenue avec l'électrode supportée obtenue selon le procédé conforme à l'invention. Par ailleurs, on observe une moins bonne stabilité au cyclage.

### Exemple comparatif 2

A la différence des techniques d'impression et d'enduction, la technique de filtration décrite dans la demande de brevet FR 2 981 206 A1, permet de fabriquer des électrodes autoportantes, c'est-à-dire sans substrat.

Une cathode a été préparée selon le procédé décrit dans FR 2 981 206 A1 à partir d'un mélange de particules solides comprenant 10% en masse de MFC, 2% en masse CMC, 68% en masse de LFP et 20% en masse de NC. La concentration massique du mélange de particules solides dans la suspension aqueuse était de 2%.

Une toile en nylon avec une ouverture de maille de 33 µm a été utilisée comme toile de filtration. Après pressage et séchage de la pâte aqueuse, une cathode flexible autosupportée a été obtenue.

Afin de pouvoir comparer la cathode supportée conforme à la présente invention et préparée selon l'exemple 3 avec la cathode telle que préparée ci-dessus et ne faisant pas partie de l'invention, les deux cathodes ont été préparées avec des épaisseurs équivalentes totale d'environ 175 µm d'épaisseur.

Les mesures d'épaisseur, de conductivité électrique, et de porosité de la cathode ont été effectuées comme décrit dans l'exemple 1 et sont répertoriées dans le tableau 6 ci-dessous. Pour rappel, les valeurs obtenues avec la cathode de l'exemple 3 sont présentés sur la première ligne dudit tableau.

**TABLEAU 6**

| **Composition cathode** | **Epaisseur totale de la cathode (µm)** | **Conductivité (S/m)** | **Porosité (%)** |
|---|---|---|---|
| **Procédé utilisé** | | | |
| LFP/NC/CMC/MFC (70/27/2/1) | 175 ± 3 | 35 ± 2 | 68 ± 3 |
| sérigraphie/pas de calandrage | | | |
| LFP/NC/CMC/MFC (68/20/2/10) | 164 ± 7 | 11 ± 1 | 65 ± 2 |
| filtration/pas de calandrage (*) | | | |

| | | | |
|---|---|---|---|
| (*) : Electrode comparative ne faisant pas partie de l'invention | | | |

D'après le tableau 6, il est possible de conclure qu'une électrode autosupportée obtenu par le procédé de filtration de l'art antérieur et ayant la même épaisseur que l'électrode supportée conforme à l'invention nécessite au moins quatre fois plus du mélange liant/agent anti-floculation. De plus, même avec des quantités élevées du mélange liant/agent anti-floculation, les propriétés physico-chimiques de la cathode sont moins bonnes en termes de conductivité.

De plus, par comparaison avec la technique de sérigraphie, la technique de filtration est très lente et nécessite l'utilisation de grands volumes d'eau, c'est-à-dire une concentration massique du mélange de particules solides dans la phase aqueuse très faible (2%) pour faciliter la filtration.

Des tests électrochimiques en demi-pile, dans une cellule de type Swagelock® de même configuration que celle décrite dans l'exemple 1, ont été effectués avec la cathode non conforme à l'invention préparée ci-dessus.

Les mesures de capacité spécifiques correspondantes à C/10 sont reportées sur la figure 14 annexée sur laquelle la capacité spécifique (en mAh.g⁻¹) est fonction du nombre de cycles. Sur cette figure, la courbe avec les losanges vides correspond aux mesures effectuées pendant la charge et la courbe avec les carrés vides correspond aux mesures effectuées pendant la décharge, le calcul étant fait par rapport à la masse de matériau actif d'électrode (LFP).

Ces résultats montrent que les cathodes non conformes à l'invention, c'est-à-dire préparées par filtration ont une capacité spécifique d'environ 46 mAh/g (par rapport à la masse de matériau actif LFP), cette capacité spécifique étant très nettement inférieure à celle obtenue avec l'électrode supportée conforme à l'invention. De plus, on observe une certaine instabilité au cyclage.

Par ailleurs, FR 2 981 206 A1 utilise pour la préparation de la cathode un additif tel que le sulfate d'aluminium hydraté. Cet additif permet d'améliorer l'affinité entre le liant (matériau ligno-cellulosique) et l'agent générant une conductivité électronique (noir de carbone). La cathode décrite dans FR 2 981 206 A1 comprend 60% de LFP, 24% de NC, 0,6% de CMC, 15% de fibres de cellulose raffinées et 0,4% de sulfate d'aluminium hydraté. Dans ce cas, la capacité spécifique obtenue est améliorée (capacité spécifique de 55 mAh/g) et la stabilité au cyclage est bonne. Cette capacité spécifique est cependant nettement inférieure à celle obtenue avec le procédé d'impression conforme à l'invention (capacité spécifique de 140 mAh/g).

Ainsi, le procédé conforme à l'invention permet d'une part d'améliorer les performances électrochimiques et d'autre part ces performances sont atteintes sans additifs tels que le sulfate d'aluminium hydraté.

Les résultats présentés dans les différents exemples ci-dessus montrent que le procédé d'impression conforme à l'invention permet d'obtenir une électrode flexible supportée possédant des performances électrochimiques élevées en termes de capacité spécifique et de stabilité au cyclage et une bonne conductivité. Par ailleurs, ledit procédé évite l'utilisation de solvants organiques, plastifiants, liants polymères conventionnels non respectueux de l'environnement et il permet :
- de fabriquer des électrodes, en un temps considérablement réduit d'environ 3 minutes, la durée de fabrication par procédé de filtration étant d'environ 10 minutes par électrode.
- une grande sélectivité de la localisation du dépôt qui n'est pas envisageable avec les techniques d'enduction et de filtration,
- l'élaboration d'un dépôt multicouche,
- l'élaboration d'un dépôt recto-verso, de manière à éviter la phase d'assemblage entre les électrodes et le séparateur lors de la fabrication de la batterie complète, et
- un désassemblage aisé en fin de vie de l'électrode par redispersion dans l'eau.

## Revendications

1. Procédé de préparation d'une électrode flexible supportée comprenant au moins une matière active d'électrode, au moins un liant et au moins un substrat flexible, ledit procédé comportant au moins les étapes suivantes :
i) une étape de préparation d'une encre d'électrode par dispersion d'un mélange de particules solides dans une phase aqueuse, ledit mélange de particules solides comprenant :
- au moins une matière active d'électrode, en une quantité variant de 70 à 99,5% en masse par rapport à la masse totale du mélange de particules solides,
- au moins un liant comprenant un matériau ligno-cellulosique, en une quantité variant de 0,5 à 30% en masse par rapport à la masse totale du mélange de particules solides,
ledit mélange de particules solides représentant au moins 25% en masse de la masse totale de l'encre d'électrode ;
ii) une étape de transfert de l'encre d'électrode obtenue ci-dessus à l'étape i) sur au moins une partie d'une des faces d'un substrat flexible par technique d'impression ou de dépôt par atomisation, ledit substrat flexible étant choisi parmi un substrat cellulosique, un film polymère et une membrane polymère éventuellement renforcée avec de la cellulose ; et
iii) une étape de séchage pour obtenir une électrode flexible supportée comprenant le substrat et un film d'électrode déposé sur au moins une partie d'une des faces dudit substrat flexible.

2. Procédé selon la revendication 1, **caractérisé en ce que** le matériau ligno-cellulosique est choisi parmi les fibres de cellulose, les fibres de cellulose raffinées, les microfibrilles de cellulose, les nanofibrilles de cellulose et la lignine.

3. Procédé selon la revendication 1 ou 2, **caractérisé en ce que** le liant comprenant un matériau ligno-cellulosique représente de 0,5 à 1,5% en masse par rapport à la masse totale du mélange de particules solides.

4. Procédé selon la revendication 1, 2 ou 3, **caractérisé en ce qu'**un agent anti-floculation des fibres est incorporé à la suspension aqueuse de l'étape i).

5. Procédé selon la revendication 4, **caractérisé en ce que** l'agent anti-floculation est choisi parmi la carboxyméthylcellulose (CMC), l'amidon, l'amidon modifié et l'un de leurs mélanges.

6. Procédé selon la revendication 4 ou 5, **caractérisé en ce que** l'agent anti-floculation des fibres représente de 0,5 à 2,5% en masse par rapport à la masse totale du mélange de particules solides.

7. Procédé selon l'une quelconque des revendications précédentes, **caractérisé en ce que** qu'un agent générant une conductivité électronique est incorporé à la suspension aqueuse de l'étape i).

8. Procédé selon la revendication 7, **caractérisé en ce que** l'agent générant une conductivité électronique est choisi parmi le noir de carbone, le carbone SP, le noir d'acétylène, les fibres et nanofibres de carbone, les nanotubes de carbone, les particules et fibres métalliques et l'un de leurs mélanges.

9. Procédé selon la revendication 7 ou 8, **caractérisé en ce que** l'agent générant une conductivité électronique représente de 25 à 35% en masse par rapport à la masse totale du mélange de particules solides.

10. Procédé selon l'une quelconque des revendications précédentes, **caractérisé en ce que** la concentration massique du mélange de particules solides dans l'encre d'électrode à l'issue de l'étape i) varie de 28 à 42%.

11. Procédé selon l'une quelconque des revendications précédentes, **caractérisé en ce que** la technique d'impression utilisée est choisie parmi la sérigraphie, la flexographie et l'héliogravure.

12. Procédé selon les revendications 4 à 11, **caractérisé en ce que** la dispersion du mélange de particules solides dans une phase aqueuse de l'étape i) est réalisée selon les sous-étapes suivantes :
i-1) l'agent anti-floculation et la phase aqueuse sont mélangés et dispersés à l'aide d'un disperseur à pâles mécaniques, pendant une durée variant de 2 à 10 min à une vitesse variant de 450 à 550 trs/min,
i-2) le liant comprenant un matériau ligno-cellulosique est ajouté au mélange obtenu ci-dessus à l'étape i-1), puis le mélange résultant est dispersé pendant une durée variant de 5 à 20 min à une vitesse variant de 450 à 550 trs/min,
i-3) la matière active d'électrode et éventuellement l'agent générant une conductivité électronique sont ajoutés au mélange obtenu ci-dessus à l'étape i-2), puis le mélange résultant est dispersé pendant une durée variant de 5 à 20 min à une vitesse variant de 450 à 550 trs/min,
i-4) le mélange ainsi obtenu à l'étape i-3) est agité mécaniquement à l'aide d'un disperseur à pâles mécaniques pendant une durée variant de 10 à 25 min, à une vitesse variant de 2500 à 3500 trs/min.

13. Procédé selon la revendication 12, **caractérisé en ce que** lorsqu'une matière active d'anode est utilisée dans l'étape i-3), le mélange obtenu à l'étape i-3) est homogénéisé selon une sous-étape supplémentaire dans un laminoir tricylindre pendant une durée allant de 5 à 10 minutes avant d'entreprendre l'étape i-4).

14. Procédé selon l'une quelconque des revendications précédentes, **caractérisé en ce que** le film d'électrode déposé sur au moins une partie d'une des faces dudit substrat présente une épaisseur variant de 30 à 100 µm.

15. Procédé selon l'une quelconque des revendications précédentes, **caractérisé en ce qu'**il comprend en outre une étape iv) de calandrage de l'électrode flexible supportée telle qu'obtenue selon l'étape iii).

16. Procédé selon l'une quelconque des revendications précédentes, **caractérisé en ce que** la matière active d'électrode utilisée lors de l'étape i) et permettant d'obtenir une électrode flexible supportée positive, est choisie parmi LiₓMn_{y}O₄ (0<x<2, 0<y<2 et x+y=3), LiCoO₂, LiMPO₄, (M = Fe, Mn, Co, Ni), LiAlₓCo_{y}Ni_{z}O₂ (0<x<1, 0<y<1, 0<z<1 et x+y+z=1) et LiNl_{(1-y)}Co_{y}O₂ (0≤y≤1).

17. Procédé selon l'une quelconque des revendications précédentes, **caractérisé en ce que** la matière active d'électrode utilisée lors de l'étape i) et permettant d'obtenir une électrode flexible supportée négative est choisie parmi : le graphite, le carbone dur, le carbone mou et les alliages métallique Li_{Y}M (1<y<5 et M = Mn, Sn, Pb, Si, In, Ti).

18. Procédé de fabrication d'une batterie lithium-ion comprenant :
- une électrode flexible supportée positive comprenant un substrat flexible S1 et un film de cathode F1 déposé sur au moins une partie d'une des faces dudit substrat flexible S1, et
- une électrode flexible supportée négative comprenant un substrat flexible S2 et un film d'anode F2 déposé sur au moins une partie d'une des faces dudit substrat flexible S2,
- un électrolyte gel ou un électrolyte liquide placé entre lesdites électrodes, et ledit procédé comprenant au moins les étapes suivantes :
a) une étape de préparation d'une électrode flexible supportée positive selon les étapes i), ii), iii) et éventuellement l'étape iv) du procédé tel que défini selon l'une quelconque des revendications 1 à 16,
b) une étape de préparation d'une électrode flexible supportée négative selon les étapes i), ii), iii) et éventuellement l'étape iv) du procédé tel que défini selon l'une quelconque des revendications précédentes 1 à 15 et 17,
c) une étape d'assemblage des électrodes telles qu'obtenues ci-dessus aux étapes a) et b), de manière à ce que lesdits substrats flexibles S1 et S2 soient placés face à face dans ladite batterie, formant ainsi un séparateur S1-S2 entre le film de cathode F1 et le film d'anode F2, et l'une ou l'autre des étapes suivantes :
d-1) une étape d'imprégnation des électrodes telles qu'assemblées ci-dessus à l'étape c) par un électrolyte liquide, ou
d-2) une étape d'encapsulation de l'électrolyte gel dans chacun des substrats flexibles S1 et S2, ladite étape d'encapsulation étant préalable aux étapes a) et b) de préparation des électrodes.

19. Procédé de fabrication d'une batterie lithium-ion comprenant :
- une électrode flexible supportée positive comprenant un substrat flexible S1 et un film de cathode F1 déposé sur au moins une partie d'une des faces dudit substrat flexible S1, et
- une électrode flexible supportée négative comprenant ledit substrat flexible S1 et un film d'anode F2 déposé sur au moins une partie de l'autre face dudit substrat flexible S1,
- un électrolyte gel ou un électrolyte liquide placé entre lesdites électrodes, et ledit procédé comprenant au moins les étapes suivantes :
a) une étape de préparation d'une électrode flexible supportée positive selon les étapes i), ii), iii) et éventuellement l'étape iv) du procédé tel que défini selon l'une quelconque des revendications 1 à 16, de manière à obtenir un film de cathode F1 déposé sur au moins une partie d'une des faces dudit substrat flexible S1,
b) une étape de préparation d'une électrode flexible supportée négative selon les étapes i), ii), iii) et éventuellement l'étape iv) du procédé tel que défini selon l'une quelconque des revendications 1 à 15 et 17, de manière à obtenir un film d'anode F2 déposé sur au moins une partie de l'autre face dudit substrat flexible S1, ledit substrat flexible S1 formant ainsi un séparateur S1 entre le film de cathode F1 et le film d'anode F2, et l'une ou l'autre des étapes suivantes :
d-1) une étape d'imprégnation des électrodes telles qu'obtenues ci-dessus à l'étape b) par un électrolyte liquide, ou
d-2) une étape d'encapsulation de l'électrolyte gel dans le substrat flexible S1, ladite étape d'encapsulation étant préalable aux étapes a) et b) de préparation des électrodes.

## Patentansprüche

1. Verfahren zur Herstellung einer geträgerten flexiblen Elektrode, umfassend mindestens eine aktives Elektrodenmaterial, mindestens ein Bindemittel und mindestens ein flexibles Substrat, wobei das Verfahren mindestens die folgenden Schritte umfasst:
i) einen Herstellungsschritt einer Elektrodentinte durch Verteilen eines Gemischs fester Partikel in einer wässrigen Phase, wobei das Gemisch fester Partikel umfasst:
- mindestens eine aktives Elektrodenmaterial in einer Menge, die von 70 bis 99,5 Ma% in Bezug auf die Gesamtmasse des Gemischs fester Partikel schwankt,
- mindestens ein Bindemittel, umfassend ein Lignocellulosematerial in einer Menge, die von 0,5 bis 30 Ma% in Bezug auf die Gesamtmasse des Gemischs fester Partikel schwankt,
wobei das Gemisch fester Partikel mindestens 25 Ma% der Gesamtmasse der Elektrodentinte darstellt,
ii) einen Übertragungsschritt der in obigem Schritt i) erhaltenen Elektrodentinte auf mindestens einen Teil einer der Flächen eines flexiblen Substrats durch Druck- oder Sprühablagerungstechnik, wobei das flexible Substrat aus einem Cellulosesubstrat, einer Polymerfolie und eine eventuell mit Cellulose verstärkten Polymermembran ausgewählt ist, und
iii) einen Trocknungsschritt, um eine geträgerte flexible Elektrode zu erhalten, die das Substrat und eine Elektrodenfolie umfasst, die auf mindestens einen Teil einer der Flächen des flexiblen Substrats aufgebracht ist.

2. Verfahren nach Anspruch 1, **dadurch gekennzeichnet, dass** das Lignocellulosematerial aus den Cellulosefasern, den raffinierten Cellulosefasern, den Cellulose-Mikrofibrillen, den Cellulose-Nanofibrillen und dem Lignin ausgewählt ist.

3. Verfahren nach Anspruch 1 oder 2, **dadurch gekennzeichnet, dass** das Bindemittel, das ein Lignocellulosematerial umfasst, 0,5 bis 1,5 Ma% in Bezug auf die Gesamtmasse des Gemischs fester Partikel darstellt.

4. Verfahren nach Anspruch 1, 2 oder 3, **dadurch gekennzeichnet, dass** ein Antiflockungsmittel der Fasern in die wässrige Suspension von Schritt i) eingearbeitet wird.

5. Verfahren nach Anspruch 4, **dadurch gekennzeichnet, dass** das Antiflockungsmittel aus der Carboxymethylcellulose (CMC), der Stärke, der modifizierten Stärke und einem ihrer Gemische ausgewählt ist.

6. Verfahren nach Anspruch 4 oder 5, **dadurch gekennzeichnet, dass** das Antiflockungsmittel der Fasern 0,5 bis 2,5Ma% in Bezug auf die Gesamtmasse des Gemischs fester Partikel darstellt.

7. Verfahren nach einem der vorangehenden Ansprüche, **dadurch gekennzeichnet, dass** ein Mittel, welches eine elektronische Leitfähigkeit erzeugt, in die wässrige Suspension von Schritt i) eingearbeitet wird.

8. Verfahren nach Anspruch 7, **dadurch gekennzeichnet, dass** das Mittel, welches eine elektronische Leitfähigkeit erzeugt, aus dem Carbonschwarz, dem SP-Carbon, dem Acetylen-Schwarz, den Carbonfasern und -nanofasern, den Carbon-Nanoröhrchen, den Metallpartikeln und -fasern und einem ihrer Gemische ausgewählt ist.

9. Verfahren nach Anspruch 7 oder 8, **dadurch gekennzeichnet, dass** das Mittel, welches eine elektronische Leitfähigkeit erzeugt, 25 bis 35 Ma% in Bezug auf die Gesamtmasse des Gemischs fester Partikel darstellt.

10. Verfahren nach einem der vorangehenden Ansprüche, **dadurch gekennzeichnet, dass** die Massenkonzentration des Gemischs fester Partikel in der Elektrodentinte nach Schritt i) von 28 bis 42 % schwankt.

11. Verfahren nach einem der vorangehenden Ansprüche, **dadurch gekennzeichnet, dass** die verwendete Drucktechnik aus dem Siebdruck, dem Flexodruck und dem Tiefdruck ausgewählt ist.

12. Verfahren nach den Ansprüchen 4 bis 11, **dadurch gekennzeichnet, dass** die Dispersion des Gemischs fester Partikel in einer wässrigen Phase von Schritt i) gemäß den folgenden Unterschritten durchgeführt wird:
i-1) Mischen des Antiflockungsmittels und der wässrigen Phase und Verteilen mit Hilfe eines Verteilers mit mechanischen Schaufeln während einer Dauer, die von 2 bis 10 Min. schwankt, mit einer Geschwindigkeit, die von 450 bis 550 U/min schwankt,
i-2) Hinzufügen des Bindemittels, welches ein Lignocellulosematerial umfasst, zu dem obigen, in Schritt i-1) erhaltenen Gemisch, dann Verteilen des erhaltenen Gemischs während einer Dauer, die von 5 bis 20 Min. schwankt, mit einer Geschwindigkeit, die von 450 bis 550 U/min schwankt,
i-3) Hinzufügen des aktiven Elektrodenmaterials und eventuell des Mittels, welches eine elektronische Leitfähigkeit erzeugt, zu dem obigen, in Schritt i-2) erhaltenen Gemisch, dann Verteilen des erhaltenen Gemischs während einer Dauer, die von 5 bis 20 Min. schwankt, mit einer Geschwindigkeit, die von 450 bis 550 U/min schwankt,
i-4) mechanisches Rühren des in Schritt i-3) erhaltenen Gemischs mit Hilfe eines Verteilers mit mechanischen Schaufeln während einer Dauer, die von 10 bis 25 Min. schwankt, mit einer Geschwindigkeit, die von 2500 bis 3500 U/min schwankt.

13. Verfahren nach Anspruch 12, **dadurch gekennzeichnet, dass**, wenn in Schritt i-3) ein aktives Anodenmaterial verwendet wird, das in Schritt i-3) erhaltene Gemisch gemäß einem zusätzlichen Unterschritt in einer dreizylindrigen Walze während einer Dauer von 5 bis 10 Minuten homogenisiert wird, bevor Schritt i-4) durchgeführt wird.

14. Verfahren nach einem der vorangehenden Ansprüche, **dadurch gekennzeichnet, dass** die auf mindestens einen Teil einer der Flächen des Substrats aufgebrachte Elektrodenfolie eine Stärke aufweist, die von 30 bis 100 µm schwankt.

15. Verfahren nach einem der vorangehenden Ansprüche, **dadurch gekennzeichnet, dass** es ferner einen Kalanderschritt iv) der geträgerten flexiblen Elektrode aus Schritt iii) umfasst.

16. Verfahren nach einem der vorangehenden Ansprüche, **dadurch gekennzeichnet, dass** das in Schritt i) verwendete aktive Elektrodenmaterial, das erlaubt eine positive geträgerte flexible Elektrode zu erhalten, aus LiₓMn_{y}O₄ (0<x<2, 0<y<2 und x+y=3), LiCoO₂, LiMPO₄, (M = Fe, Mn, Co, Ni), LiAlₓCo_{y}Ni_{z}O₂ (0<x<1, 0<y<1, 0<z<1 und x+y+z=1) und LiNi_{(1-y)}Co_{y}O₂ (0≤y≤1) ausgewählt ist.

17. Verfahren nach einem der vorangehenden Ansprüche, **dadurch gekennzeichnet, dass** das in Schritt i) verwendete aktive Elektrodenmaterial, das erlaubt eine negative geträgerte flexible Elektrode zu erhalten, aus dem Graphit, dem harten Carbon, dem weichen Carbon und den Metalllegierungen Li_{Y}M (1<y<5 und M = Mn, Sn, Pb, Si, In, Ti) ausgewählt ist.

18. Verfahren zur Herstellung eine Lithiumionenbatterie, umfassend:
- eine positive geträgerte flexible Elektrode, umfassend ein flexibles Substrat S1 und eine Kathodenfolie F1, die auf mindestens einen Teil einer der Flächen des flexiblen Substrats S1 aufgebracht ist, und
- eine negative geträgerte flexible Elektrode, umfassend ein flexibles Substrat S2 und eine Anodenfolie F2, die auf mindestens einen Teil einer der Flächen des flexiblen Substrats S2 aufgebracht ist,
- ein Elektrolytgel oder eine Elektrolytflüssigkeit, platziert zwischen den Elektroden, und wobei das Verfahren mindestens die folgenden Schritte umfasst:
a) einen Herstellungsschritt einer positiven geträgerten flexiblen Elektrode gemäß den Schritten i), ii), iii) und eventuell Schritt iv) des Verfahrens nach einem der Ansprüche 1 bis 16,
b) einen Herstellungsschritt einer negativen geträgerten flexiblen Elektrode gemäß den Schritten i), ii), iii) und eventuell Schritt iv) des Verfahrens nach einem der vorangehenden Ansprüche 1 bis 15 und 17,
c) einen Montageschritt der oben in den Schritten a) und b) erhaltenen Elektroden, so dass die flexiblen Substrate S1 und S2 Seite an Seite in der Batterie platziert sind, bildend damit einen Separator S1-S2 zwischen der Kathodenfolie F1 und der Anodenfolie F2, und den einen oder einen anderen der folgenden Schritte:
d-1) einen Imprägnierungsschritt der Elektroden, wie in obigem Schritt c) montiert, mit einer Elektrolytflüssigkeit, oder
d-2) einen Kapselschritt des Elektrolytgels in jedes der flexiblen Substrate S1 und S2, wobei der Kapselschritt vor den Herstellungsschritten a) und b) der Elektroden erfolgt.

19. Verfahren zur Herstellung eine Lithiumionenbatterie, umfassend:
- eine positive geträgerte flexible Elektrode, umfassend ein flexibles Substrat S1 und eine Kathodenfolie F1, die auf mindestens einen Teil einer der Flächen des flexiblen Substrats S1 aufgebracht ist, und
- eine negative geträgerte flexible Elektrode, umfassend das flexible Substrat S1 und eine Anodenfolie F2, die auf mindestens einen Teil einer der anderen Fläche des flexiblen Substrats S1 aufgebracht ist,
- ein Elektrolytgel oder eine Elektrolytflüssigkeit, platziert zwischen den Elektroden, und wobei das Verfahren mindestens die folgenden Schritte umfasst:
a) einen Herstellungsschritt einer positiven geträgerten flexiblen Elektrode gemäß den Schritten i), ii), iii) und eventuell Schritt iv) des Verfahrens nach einem der Ansprüche 1 bis 16, um eine Kathodenfolie F1 zu erhalten, die auf mindestens einen Teil einer der Flächen des flexiblen Substrats S1 aufgebracht ist,
b) einen Herstellungsschritt einer negativen geträgerten flexiblen Elektrode gemäß den Schritten i), ii), iii) und eventuell Schritt iv) des Verfahrens nach einem der vorangehenden Ansprüche 1 bis 15 und 17, um eine Anodenfolie F2 zu erhalten, die auf mindestens einen Teil der anderen Fläche des flexiblen Substrat S1 aufgebracht ist, wobei das flexible Substrat S1 somit einen Separator S1 zwischen der Kathodenfolie F1 und der Anodenfolie F2 bildet, und den einen oder einen anderen der folgenden Schritte:
d-1) einen Imprägnierungsschritt der Elektroden, wie in obigem Schritt b) durch eine Elektrolytflüssigkeit erhalten, oder
d-2) einen Kapselschritt des Elektrolytgels in das flexible Substrat S1, wobei der Kapselschritt vor den Herstellungsschritten a) und b) der Elektroden erfolgt.

## Claims

1. Method for preparing a supported flexible electrode comprising at least one electrode active material, at least one binder and at least one flexible substrate, said method comprising at least the following steps:
i) a step of preparing an electrode ink by dispersing a mixture of solid particles in an aqueous phase, said mixture of solid particles comprising:
- at least one electrode active material, in an amount in the range from 70 to 99.5 wt% relative to the total weight of the mixture of solid particles,
- at least one binder comprising a lignocellulosic material, in an amount in the range from 0.5 to 30 wt% relative to the total weight of the mixture of solid particles,
said mixture of solid particles representing at least 25 wt% of the total weight of the electrode ink;
ii) a step of transferring the electrode ink obtained above in step i) onto at least a portion of one of the faces of a flexible substrate by a printing or spray deposition technique, said flexible substrate being selected from a cellulosic substrate, a polymer film and a polymer membrane optionally reinforced with cellulose; and
iii) a drying step to obtain a supported flexible electrode comprising the substrate and an electrode film deposited on at least a portion of one of the faces of said flexible substrate.

2. Method according to Claim 1, **characterized in that** the lignocellulosic material is selected from cellulose fibres, refined cellulose fibres, cellulose microfibrils, cellulose nanofibrils and lignin.

3. Method according to Claim 1 or 2, **characterized in that** the binder comprising a lignocellulosic material represents from 0.5 to 1.5 wt% relative to the total weight of the mixture of solid particles.

4. Method according to Claim 1, 2 or 3, **characterized in that** a fibre anti-flocculant is incorporated in the aqueous suspension in step i).

5. Method according to Claim 4, **characterized in that** the anti-flocculant is selected from carboxymethylcellulose (CMC), starch, modified starch and a mixture thereof.

6. Method according to Claim 4 or 5, **characterized in that** the fibre anti-flocculant represents from 0.5 to 2.5 wt% relative to the total weight of the mixture of solid particles.

7. Method according to any one of the preceding claims, **characterized in that** an agent generating electron conductivity is incorporated in the aqueous suspension in step i).

8. Method according to Claim 7, **characterized in that** the agent generating electron conductivity is selected from carbon black, carbon SP, acetylene black, carbon fibres and nanofibres, carbon nanotubes, metal particles and fibres and a mixture thereof.

9. Method according to Claim 7 or 8, **characterized in that** the agent generating electron conductivity represents from 25 to 35 wt% relative to the total weight of the mixture of solid particles.

10. Method according to any one of the preceding claims, **characterized in that** the concentration by weight of the mixture of solid particles in the electrode ink at the end of step i) varies from 28 to 42%.

11. Method according to any one of the preceding claims, **characterized in that** the printing technique used is selected from screen printing, flexography and gravure printing.

12. Method according to Claims 4 to 11, **characterized in that** dispersion of the mixture of solid particles in an aqueous phase in step i) is carried out according to the following substeps:
i-1) the anti-flocculant and the aqueous phase are mixed and dispersed using a mechanical blade dispersing machine, for a time ranging from 2 to 10 min at a speed ranging from 450 to 550 rev/min,
i-2) the binder comprising a lignocellulosic material is added to the mixture obtained above in step i-1), then the resultant mixture is dispersed for a time ranging from 5 to 20 min at a speed ranging from 450 to 550 rev/min,
i-3) the electrode active material and optionally the agent generating electron conductivity are added to the mixture obtained above in step i-2), then the resultant mixture is dispersed for a time ranging from 5 to 20 min at a speed ranging from 450 to 550 rev/min,
i-4) the mixture thus obtained in step i-3) is stirred mechanically using a mechanical blade dispersing machine for a time ranging from 10 to 25 min, at a speed ranging from 2500 to 3500 rev/min.

13. Method according to Claim 12, **characterized in that** when an anode active material is used in step i-3), the mixture obtained in step i-3) is homogenized according to an additional substep in a three-roller mill for a time in the range from 5 to 10 minutes before carrying out step i-4).

14. Method according to any one of the preceding claims, **characterized in that** the electrode film deposited on at least a portion of one of the faces of said substrate has a thickness ranging from 30 to 100 µm.

15. Method according to any one of the preceding claims, **characterized in that** it further comprises a step iv) of calendering the supported flexible electrode as obtained according to step iii).

16. Method according to any one of the preceding claims, **characterized in that** the electrode active material used in step i) and making it possible to obtain a supported flexible positive electrode, is selected from LiₓMn_{y}O₄ (0<x<2, 0<y<2 and x+y=3), LiCoO₂, LiMPO₄, (M = Fe, Mn, Co, Ni), LiAlₓCo_{y}Ni_{z}O₂ (0<x<1, 0<y<1, 0<z<1 and x+y+z=1) and LiNl_{(1-y)}Co_{y}O₂ (0≤y≤1).

17. Method according to any one of the preceding claims, **characterized in that** the electrode active material used in step i) and making it possible to obtain a supported flexible negative electrode is selected from: graphite, hard carbon, soft carbon and the metal alloys Li_{y}M (1<y<5 and M = Mn, Sn, Pb, Si, In, Ti).

18. Method for manufacturing a lithium-ion battery comprising:
- a supported flexible positive electrode comprising a flexible substrate S1 and a cathode film F1 deposited on at least a portion of one of the faces of said flexible substrate S1, and
- a supported flexible negative electrode comprising a flexible substrate S2 and an anode film F2 deposited on at least a portion of one of the faces of said flexible substrate S2,
- a gel electrolyte or a liquid electrolyte placed between said electrodes, with said method comprising at least the following steps:
a) a step of preparing a supported flexible positive electrode according to steps i), ii), iii) and optionally step iv) of the method as defined according to any one of Claims 1 to 16,
b) a step of preparing a supported flexible negative electrode according to steps i), ii), iii) and optionally step iv) of the method as defined according to any one of the preceding Claims 1 to 15 and 17,
c) a step of assembling the electrodes as obtained above in steps a) and b), so that said flexible substrates S1 and S2 are placed face to face in said battery, thus forming a separator S1-S2 between the cathode film F1 and the anode film F2, and one or other of the following steps:
d-1) a step of impregnating the electrodes as assembled above in step c) with a liquid electrolyte, or
d-2) a step of encapsulating the gel electrolyte in each of the flexible substrates S 1 and S2, said encapsulation step taking place before steps a) and b) of preparing the electrodes.

19. Method for manufacturing a lithium-ion battery comprising:
- a supported flexible positive electrode comprising a flexible substrate S1 and a cathode film F1 deposited on at least a portion of one of the faces of said flexible substrate S1, and
- a supported flexible negative electrode comprising said flexible substrate S 1 and an anode film F2 deposited on at least a portion of the other face of said flexible substrate S 1,
- a gel electrolyte or a liquid electrolyte placed between said electrodes, with said method comprising at least the following steps:
a) a step of preparing a supported flexible positive electrode according to steps i), ii), iii) and optionally step iv) of the method as defined according to any one of Claims 1 to 16, so as to obtain a cathode film F1 deposited on at least a portion of one of the faces of said flexible substrate S 1,
b) a step of preparing a supported flexible negative electrode according to steps i), ii), iii) and optionally step iv) of the method as defined according to any one of Claims 1 to 15 and 17, so as to obtain an anode film F2 deposited on at least a portion of the other face of said flexible substrate S1, said flexible substrate S1 thus forming a separator S1 between the cathode film F1 and the anode film F2, and one or other of the following steps:
d-1) a step of impregnating the electrodes as obtained above in step b) with a liquid electrolyte, or
d-2) a step of encapsulating the gel electrolyte in the flexible substrate S1, said encapsulation step taking place before steps a) and b) of preparing the electrodes.
